# EUROPEAN PATENT SPECIFICATION

(11) **EP 3 098 802 B1**
(45) Date of publication and mention of the grant of the patent: **01.08.2018**
(21) Application number: 15003299.3
(22) Date of filing: 19.11.2015
(51) Int. Cl.: G09G 3/20, G06F 1/16

(54) **FLEXIBLE DISPLAY DEVICE AND OPERATING METHOD THEREOF**
FLEXIBLE ANZEIGEVORRICHTUNG UND BETRIEBSVERFAHREN DAFÜR
DISPOSITIF D'AFFICHAGE FLEXIBLE ET PROCÉDÉ DE COMMANDE CORRESPONDANT

(30) Priority: 27.05.2015 KR 20150073965
(43) Date of publication of application: 30.11.2016
(73) Proprietor: LG Electronics Inc., Seoul 07336 (KR)
(72) Inventor: CHI, Jumin, 06772 Seoul (KR); EIM, Sanghyun, 06772 Seoul (KR)
(74) Representative: Beyer, Andreas

(56) References cited:
- WO-A1-2014/171578
- US-A1- 2013 275 910
- US-A1- 2014 218 375
- US-A1- 2015 029 229

## Description

### DESCRIPTION OF THE BACKGROUND

### Field of the Invention

The present disclosure relates to a flexible display device and an operating method thereof.

### Discussion of the Background

With the recent development of display related technology, flexible display devices at the usage stage, for example, rolled in a roll form or flexible in at least one direction, are being studied and developed. Since these displays are flexible in various forms, they satisfy the demand on a large-sized display at the usage state and a small-sized display for carrying.

Moreover, flexible display devices may be deformed to a predetermined form and also may be deformed to various forms in correspondence to a user's request or the need of a situation where a display is used. Accordingly, when the display area of a display is fixed, there may be inconvenience in use.

WO 2014/171578 A1 refers to a portable device having a flexible display unit and a control method for the same. The device provides a dimming mode for dimming the display unit when lack of user input for a preset dimming time is sensed. The dimming mode includes a first dimming mode having a first dimming time and a second dimming mode having a second dimming time. The display unit has a first state before the display unit is expanded, and a second state after the display unit is expanded.

US 2015/029229 A1 refers to a scrollable display with an adjustable screen size. The display includes a case with an exit slot. A screen extension mechanism is embedded in the case and is configured to permit the extension of a flexible electronic screen, through the exit slot, into a plurality of exposed widths.

US 2013/275910 A1 refers to a display device that incorporates a supplemental flexible display. The display device is optimized by relating certain applications as being optimized to be displayed for certain display sizes, where the display size is determined by a pulled out length of the supplemental flexible display.

US 2014/218375 A1 refers to a device including a flexible display, a length measuring unit configured to measure an expanded length of the flexible display expanded from the device, a speed measuring unit configured to measure a speed of which the flexible display expanded from the device and a processor configured to control the flexible display, the length measuring unit, and the speed measuring unit. If the flexible display is expanded to a unit length, the processor displays an application execution screen corresponding to the unit length in the flexible display.

### SUMMARY

Embodiments provide a flexible display device that expands or reduced according to a user's request.

Embodiments also provide a flexible display device for providing a variety of information according to an expansion degree in the screen size of a display unit.

The present invention is defined in the independent claim.

The details of one or more embodiments are set forth in the accompanying drawings and the description below. Other features will be apparent from the description and drawings, and from the claims.

### BRIEF DESCRIPTION OF THE DRAWINGS

Fig. 1A is a view illustrating a configuration of a flexible display device according to an embodiment of the present invention.
Fig. 1B is a view illustrating a pressure sensor configuring a sensing unit.
Fig. 1C is a view illustrating a configuration of a display unit where a sensing unit includes a plurality of acceleration sensors.
Figs. 2A and 2B are views illustrating a usage example of a stretchable display device that is an example of a flexible display device.
Figs. 3A to 3F are diagrams illustrating a configuration and operation of a rollable display device which is a type of a flexible display device.
Fig. 4 is a block diagram illustrating a mobile terminal according to an embodiment of the present invention.
FIG. 5 is a flowchart illustrating an operating method of a flexible display device according to another embodiment of the present invention.
Fig. 6 is a view of displaying a plurality of options on a screen of a flexible display device according to an embodiment of the present invention.
Figs. 7 to 22 are views illustrating information provided from each expansion area according to a degree in which a display unit expands when a more viewing option is selected from a plurality of options according to an example useful for understanding the present invention.
Figs. 23 to 25 are views illustrating a function performed as a display unit expands when a move option is selected according to an embodiment of the present invention.
Fig. 26 is a view illustrating a function performed as a display unit expands when a size adjustment option is selected according to an example useful for understanding the present invention.
Figs. 27A to 27C are views illustrating information provided from each expansion area according to expanding the screen of the display unit.
Figs. 28A to 28D are views of accessed web site windows displayed on each expansion area according to expanding the screen of the display unit.

### DETAILED DESCRIPTION OF THE EMBODIMENTS

Hereinafter, embodiments of the present invention are described in more detail with reference to accompanying drawings and regardless of the drawings symbols, same or similar components are assigned with the same reference numerals and thus overlapping descriptions for those are omitted. The suffixes "module" and "unit" for components used in the description below are assigned or mixed in consideration of easiness in writing the specification and do not have distinctive meanings or roles by themselves.

It will be understood that the terms "first" and "second" are used herein to describe various components but these components should not be limited by these terms. These terms are used only to distinguish one component from other components.

In this disclosure below, when one part (or element, device, etc.) is referred to as being 'connected' to another part (or element, device, etc.), it should be understood that the former can be 'directly connected' to the latter, or 'electrically connected' to the latter via an intervening part (or element, device, etc.). It will be further understood that when one component is referred to as being 'directly connected' or 'directly linked' to another component, it means that no intervening component is present.

The terms of a singular form may include plural forms unless they have a clearly different meaning in the context. Additionally, in this specification, the meaning of "include," "comprise," "including," or "comprising," specifies a property, a region, a fixed number, a step, a process, an element and/or a component but does not exclude other properties, regions, fixed numbers, steps, processes, elements and/or components.

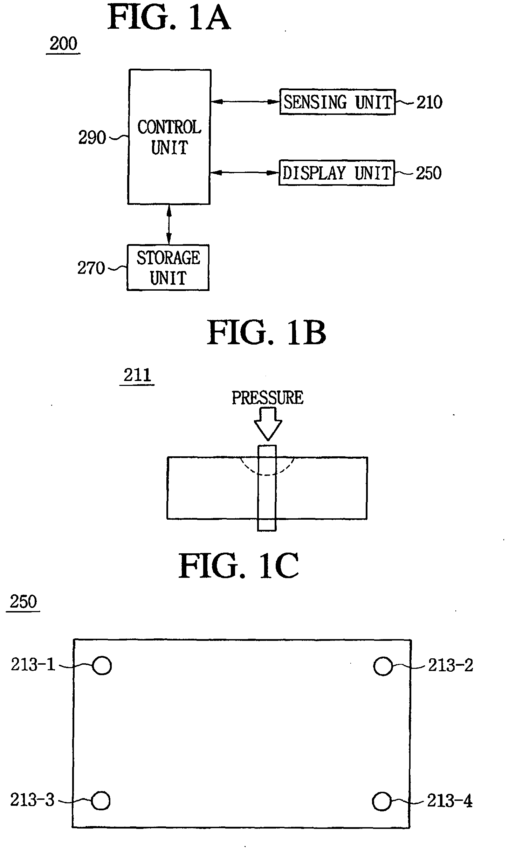

Figs. 1A to 1C are diagrams illustrating a flexible display device according to an embodiment. Fig. 1A is a block diagram illustrating a flexible display device 200 according to an embodiment, Fig. 1B is a diagram illustrating describing a pressure sensor 211 of a sensing unit 210, and Fig. 1C is a diagram illustrating a display unit 250 In which the sensing unit 210 includes a plurality of acceleration sensors 213-1 to 213-4.

The flexible display device 200 according to an embodiment is a next-generation display device that is not only bendable but also stretchable and may be implemented in various and new environments, compared to typical display devices implemented using a rigid material such as glass, silicon, or the like.

In one embodiment, the flexible display device 200 may be a stretchable display device that is stretched when being pulled and recovers its original form when being released. If a certain period of time elapses while the flexible display device is being pulled and stretched, the flexible display device may be fixed in a stretched state. When a force is applied to the flexible display device, the flexible
display device may contract to recover its original form. In another embodiment, the flexible display device 200 may be a rollable display device that can be rolled or unrolled like paper.

Referring to Fig. 1A, the flexible display device 200 may include the sensing unit 210, the display unit 250, a storage unit 270, and a control unit 290. The sensing unit 210 may detect extension or reduction of the display unit 250. The sensing unit 210 may detect a direction or strength of a force applied to the display unit 250.

In one embodiment, the sensing unit 210 may include at least one pressure sensor. The at least one pressure sensor may be disposed at the display unit 250. When the sensing unit 210 includes at least one pressure sensor, each pressure sensor 211 may detect a change in resistance or capacitance between both ends of an area to which a pressure (or force) is applied as illustrated in Fig. 1B. The pressure sensor 211 may transfer, to the control unit 290, at least one of a capacitance change signal indicating a detected capacitance change or a resistance change signal indicating a detected resistance change. The capacitance change signal or the resistance change signal may include information on at least one of the strength or the direction of the force applied to the pressure sensor 211. The control unit 290 can obtain at least one of the strength or the direction of the force applied to the display unit 250, using the capacitance change signal or the resistance change signal received from the pressure sensor 211.

In another embodiment, the sensing unit 210 may include the plurality of acceleration sensors 213-1 to 213-4 as illustrated in Fig. 1C. When the display unit 250 has a rectangular shape, each acceleration shape may be disposed adjacent to a vertex of a rectangle. When the display unit 250 includes a flexible substrate and an image display unit, the acceleration sensors 213-1 to 213-4 may be arranged under the flexible substrate, and the image display unit may be disposed on the flexible substrate. However, this arrangement is merely an example, and the acceleration sensors 213-1 to 213-4 may be embedded in the flexible substrate or the image display unit.

The acceleration sensor serves to detect an intensity of impact or an acceleration of an object. A motion state of the display unit 250 may be accurately detected using the acceleration sensor. The acceleration sensor may sense the acceleration of the display unit 250 in three axial (x-axis, y-axis, z-axis) directions perpendicular to each other. The control unit 290 can obtain a moving speed using a tri-axial acceleration measured by the acceleration sensor. The control unit 290 can obtain a tri-axially extended distance of the display unit 250 using the obtained moving speed. The control unit 290 can obtain the strength and the direction of the force applied to the display unit 250, using the moving speed and distance obtained using the acceleration sensor. The control unit 290 can extend the display unit 250 according to the direction and the strength of the force.

In another embodiment, the sensing unit 210 may include a plurality of hall sensors. The plurality of hall sensors may be arranged inside the display unit 250 or on the display unit 250. When the sensing unit 210 includes the plurality of hall sensors, the control unit 290 can extend or reduce the display unit 250 using voltage sensed by the hall sensors.

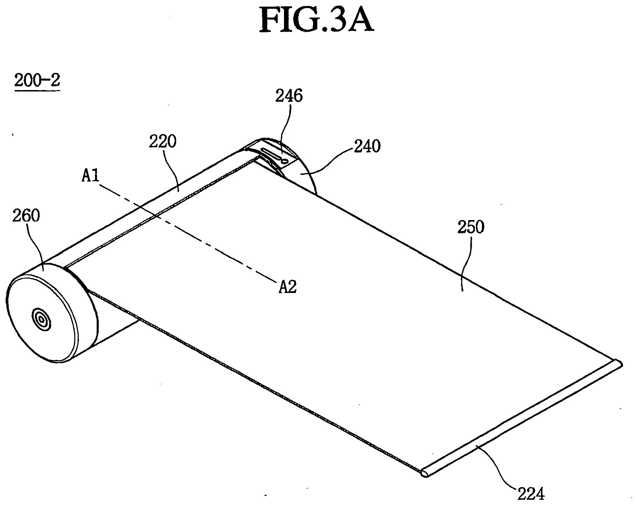

When the sensing unit 210 includes the hall sensors, an embodiment in which extension or reduction of the display unit 250 is detected using the hall sensors will be described with reference to Figs. 3A to 3F.

The display unit 250 may be stretched in at least one direction. The display unit 250 may include a flexible substrate and an image display unit. The flexible substrate may be formed of polydimethylsiloxane (PDMS) and may be extended by a pulling force. The image display unit may be disposed on the flexible substrate, and may be extended together with the flexible substrate. The image display unit may display an image. The display unit 250 may include an organic light-emitting diode (OLED).

The storage unit 270 may store a strength of a force applied to the display unit 250 and an extension degree or a reduction degree of the display unit 250 which corresponds to the strength of the force. The extension degree of the display unit 250 may indicate an extended length of the display unit 250, and the reduction degree of the display unit 250 may indicate a reduced length of the display unit 250.

The control unit 290 can detect extension or reduction of the display unit 250 via the sensing unit 210. The extension of the display unit 250 may indicate that a size of a screen able to be displayed by the display unit 250 is increased, and the reduction of the display unit 250 may indicate that the size of the screen able to be displayed by the display unit 250 is decreased. The control unit 290 can change a graphic or an image displayed on the screen according to the increase or decrease in the size of the screen of the display unit 250.

Furthermore, the control unit 290 can control overall operation of the flexible display device 200. Operation of the control unit 290 will be described in more detail later.

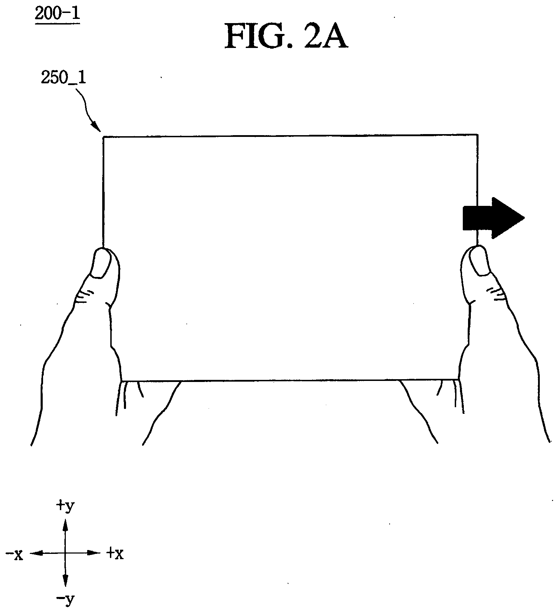

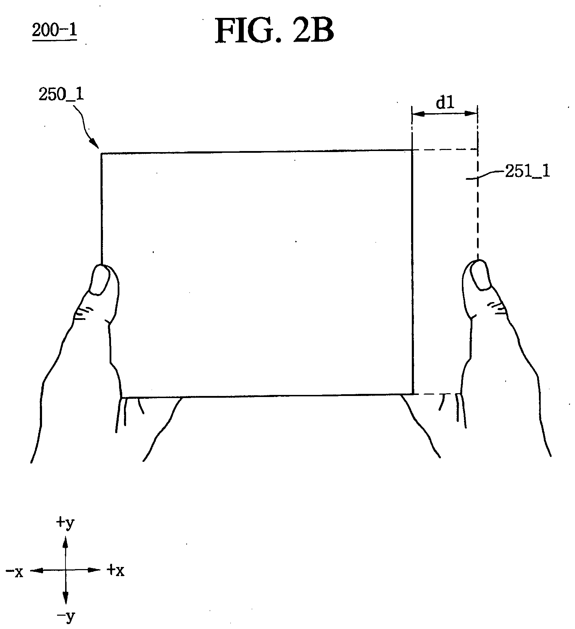

Figs. 2A and 2B illustrate exemplary use of a stretchable display device that is a type of a flexible display device. Fig. 2A illustrates a state of a display unit 250_1 before a stretchable display unit 200_1 is stretched. In this state, when a force is applied to the display unit 250_1 in a +x-axis direction, the control unit 290 can extend the display unit 250_1 by a distance of dl in the +x-axis direction as illustrated in Fig. 2B. As the display unit 250_1 is extended, the display unit 250 may be extended by as much as an extended area 251_1 corresponding to the extended distance d1. That is, the screen size of the display unit 250 may be increased by as much as the extended area 251_1. Fig. 2 illustrates that the force is applied in the +x-axis direction, but this is merely an example. When a force is applied to the display unit 250_1 in a -x-axis direction, the control unit 290 can allow the display unit 250_1 to recover its original size.

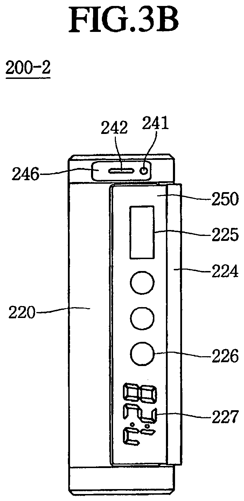

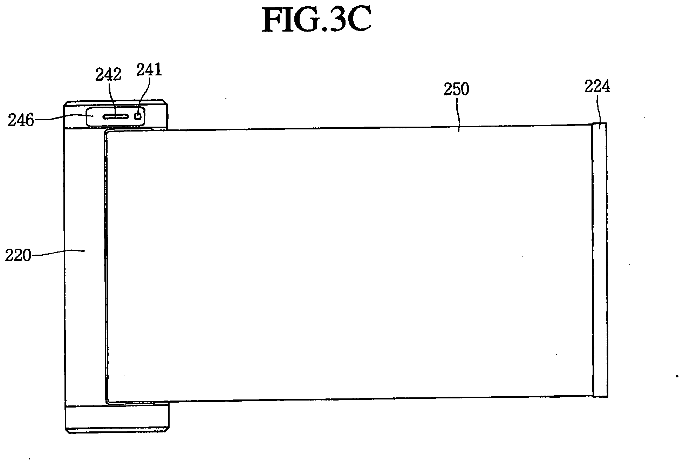

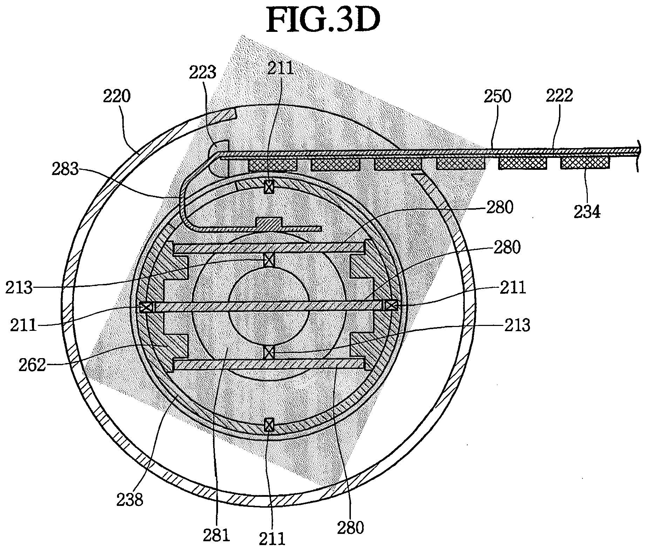

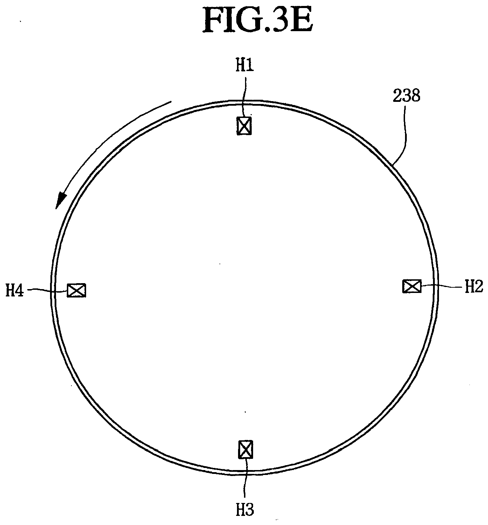

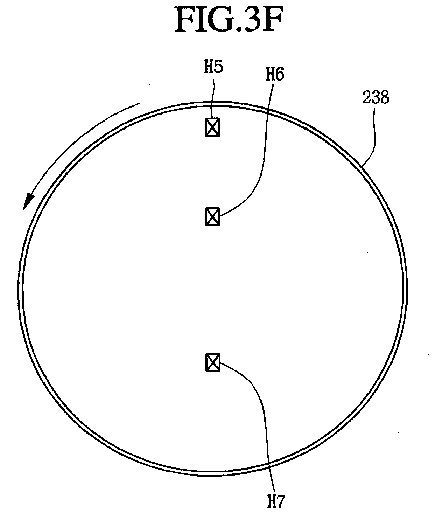

Figs. 3A to 3F are diagrams illustrating a configuration and operation of a rollable display device which is a type of a flexible display device according to an embodiment. Fig. 3A is a perspective view of the rollable display device according to an embodiment, Fig. 3B is a diagram illustrating the rollable display device that is in a first operation state according to an embodiment, Fig. 3C is a diagram illustrating the rollable display device that is in a second operation state according to an embodiment, Fig. 3D is a cross-sectional view of the rollable display device taken along line A1-A2 of Fig. 3A, and Figs. 3E and 3F are diagrams illustrating a process of sensing a spread length, a rolled length, or a rotation amount of a display unit using a hall sensor according to an embodiment.

Referring to Figs. 3A to 3D, a rollable display device 200-2 may include an upper case 240, an intermediate case 220, a lower case 260, a display unit 250, a first holder 223, and a second holder 224.

The upper case 240, the lower case 260, and the intermediate case 220 form an exterior of the rollable display device 200-2. The intermediate case 220 may have a cylindrical shape, but is not limited thereto and may have various shapes such as a hexahedral shape. As illustrated in Fig. 3D, a part of the intermediate case 220 may be opened so as to expose a part of the display unit 250.

The upper case 240 and the lower case 260 may cover the intermediate case 220 at an upper side and a lower side thereof. The upper case 240 and the lower case 260 may not expose various components arranged inside the intermediate case 220. A recess part 246 may be formed in the upper case 240, wherein the recess part 246 may be recessed towards the inside of the upper case 240 so as to have a planar shape. At least one of a camera 241 or a sound output unit 242 may be disposed in the recess part 246. The first holder 223 (see Fig. 3D) may be provided to an end portion of one side of the display unit 250, and the second holder 224 may be provided to an end portion of another side of the display unit 250.

The first holder 223 may prevent the display unit 250 from escaping from an inner side of the intermediate case 220 when a screen of the display unit 250 is maximally extended. The second holder 224 may prevent the display unit 250 from being rolled into the inner side of the intermediate case 220. A user may draw the second holder 224 in a specific direction to extend the screen of the display unit 250.

The display unit 250 may be rolled in towards the inner side of the intermediate case 220, or may be rolled out of the intermediate case 220. That is, the display unit 250 may be wound, rolled or coiled into the inner side of the intermediate case 220, or may be unwound, unrolled or uncoiled out of the intermediate case 220.

Fig. 3B is a diagram illustrating the first operation state of the rollable display device 200-2, and Fig. 3C is a diagram illustrating the second operation state of the rollable display device 200-2.

When the display unit 250 is not deformed (e.g., a state of having an infinite radius of curvature, hereinafter referred to as the first operation state), a region displayed by the display unit 250 may be a plane. When the display unit 250 is deformed by an external force in the first operation state (e.g., a state of having a finite radius of curvature, hereinafter referred to as the second operation state), a region displayed by the display unit 250 may be a curved surface. As illustrated in the drawings, information displayed in the second operation state may be time information output to the curved surface. Such time information may be implemented by individually controlling light emission of sub-pixels arranged in a matrix.

In the first operation state, the display unit 250 may not be flat but curved (e.g., vertically or horizontally curved). In this instance, when an external force is applied to the display unit 250, the display unit 250 may be deformed to be flat (or less curved) or more curved.

The display unit 250 may be combined with a touch sensor to implement a flexible touch screen. When the flexible touch screen is touched, a control unit 290 can perform control corresponding to the touch input. The flexible touch screen may detect a touch input not only in the first operation state but also in the second operation state.

The rollable display device 200-2 according to an embodiment may be provided with a deformation detecting unit for detecting deformation of the display unit 250. The deformation detecting unit may be included in the sensing unit 210 (see Fig. 1A).

The deformation detecting unit may be provided to the display unit 250 or the intermediate case 220 so as to detect information on deformation of the display unit 250. Here, the information on deformation may include a deformation direction, a deformation degree, a deformation portion, or a deformation time of the display unit 250 or an acceleration of recovery of the display unit 250 deformed, or may additionally include various information detectable due to warpage of the display unit 250.

Furthermore, the control unit 290 cancan change information displayed on the display unit 250 or generate a control signal for controlling a function of the rollable display device 200-2, based on the information on deformation of the display unit 250 detected by the deformation detecting unit.

In an embodiment, the first operation state of the rollable display device 200-2 represents an inactive state in which a minimum display region is exposed to the outside so that basic information alone is displayed. The second operation state of the rollable display device 200-2 represents an active state in which the display unit 250 is extended. Extending of the display unit 250 may indicate that a screen displayed by the display unit 250 is extended. This extending includes gradational extending.

A display region of the rollable display device 200-2, which is extended or reduced by rolling the display unit 250, may be implemented at one time at the moment of the extending or reducing, or the display region may be gradually extended or reduced. Therefore, hereinafter all states excepting the first operation state may be regarded as the second operation state, and the second operation state may be classified into a plurality of stages according to a degree of extension.

As illustrated in Fig. 3B, only regions such as a message window 225, an icon 226, or a time display part 227 may be displayed to minimize an exposed region of the display unit 250 in the first operation state. However, in the second operation state, the exposed region of the display unit 250 may be maximized to display information on a larger screen as illustrated in Fig. 3C. It is assumed that Fig. 3C illustrates a state in which the display unit 250 is maximally extended in some cases.

The control unit 290 (see Fig. 1A) may detect an unwound length of the display unit 250, and may turn on/off a part of the display unit 250 based on the unwound length. For example, the control unit 290 can obtain a length of the display unit 250 unwound out of an opened region of the intermediate case 220. The control unit 290 can turn off the display unit 250 disposed inside the intermediate case 220, and may turn on the display unit 250 unwound out of the opened region of the intermediate case 220.

Turning on a part of the display unit 250 may represent that power is applied so that the part of the display unit 250 displays information, and turning off a part of the display unit 250 may represent that power is not applied so that the part of the display unit 250 does not display information. Accordingly, since a part of the display unit 250 which is not unwound out of the intermediate case 220 is turned off, unnecessary power consumption and heating may be prevented.

Furthermore, when the display unit 250 is separated from an outer circumferential surface of an inner case 238, the control unit 290 can turn on a separated part of the display unit 250 and may turn off a non-separated part of the display unit 250. The control unit 290 can detect that the display unit 250 is separated from the outer circumferential surface of the inner case 238 using a length sensing unit 211 disposed in an inner circumferential surface of the inner case 238, so as to turn on the separated part of the display unit 250 and turn off the non-separated part of the display unit 250.

Referring to Fig. 3D, a shaft 281, the inner case 238, the length sensing unit 211, a rotation amount sensing unit 213, a plurality of circuit boards 280, a flexible circuit board 283, and a support frame 262 may be arranged in the intermediate case 220.

The shaft 281 may be rotated as the inner case 238 rotates. The inner case 238 may be shaped like a roller, may be rollable, and may serve to wind or unwind the display unit 250. The inner case 238 is axially connected to the intermediate case 220 so as to be rotatable.

The length sensing unit 211 may sense a wound length or an unwound length of the display unit 250. The length sensing unit 211 may include a magnetic member. The length sensing unit 211 may include at least one hall sensor. The length sensing unit 211 will be described later in more detail.

The rotation amount sensing unit 213 may sense the number of turns of the display unit 250 wound on the inner case 238. That is, the rotation amount sensing unit 213 may sense the number of turns of the display unit 250 wound on the inner case 238 as the display unit 250 is rolled. The rotation amount sensing unit 213 may include a magnetic member. The rotation amount sensing unit 213 may include at least one hall sensor. The rotation amount sensing unit 213 will be described later in more detail.

A plurality of electronic circuit components for operating the rollable display device 200-2 may be mounted on each circuit board 280. The flexible circuit board 283 may connect electronic circuit components mounted on the inner case 238 to the display unit 250. The electronic circuit component may include at least one of the sensing unit 210, the storage unit 270, or the control unit 290 illustrated in Fig. 1A.

The support frame 262 may support the circuit board 280, and may be disposed in the inner case 238. The inner case 238 may be rotated by magnetism between the length sensing unit 211 and rolling sensing units 234 spaced apart from each other under the display unit 250. The rolling sensing unit 234 may include a magnetic member, and may include at least one hall sensor.

The display unit 250 may be rotated together with the inner case 238 while being rolled on the inner case 238 by the magnetism. In more detail, the display unit 250 may be rolled by attraction between the rolling sensing unit 234 and the length sensing unit 211. For example, when the length sensing unit 211 includes an N-pole magnetic member and the rolling sensing unit 234 includes an S-pole magnetic member, they attract each other.

A position of the length sensing unit 211 may be fixed. The rolling sensing unit 234 is attracted towards the length sensing unit 211 while moving linearly, and the rolling sensing units 234 spaced apart from each other are continually introduced into the intermediate case 220. Since the rolling sensing unit 234 that has been already introduced and the length sensing unit 211 continuously attract each other, the rolling sensing unit 234 newly introduced and the length sensing unit 211 maintain a balance in terms of attraction so that the rolling sensing units 234 are rotated around the length sensing units 211. By virtue of this mechanism, the display unit 250 is wound while being rolled.

A sheet 222 provided with the rolling sensing unit 234 may be disposed on a lower surface of the display unit 250. The sheet 222 may be included in the display unit 250, or may be present independently from the display unit 250. The sheet 222 may be flexible. For example, the sheet 222 may be silicone or Thermoplastic Poly Urethane (TPU). The sheet 222 may be bonded to the lower surface of the display unit 250 in the form of a sheet frame, may sequentially fix the rolling sensing units 234, and may be formed through bonding, tape or insert molding. Furthermore, the sheet 222 may be formed of a material that is flexible, has excellent elasticity and elongation, and enables maintenance of a small thickness of the sheet 222.

This is intended to allow the rolling sensing units 234 to have the same magnetic pole so that the display unit 250 is spread flat by repulsion. That is, the rolling sensing units 234 having the same magnetic pole repel each other by a repulsive force so that the display unit 250 is spread flat.

The length sensing unit 211 may sense magnetism between the rolling sensing unit 234 and the length sensing unit 211 to calculate the wound length or the unwound length of the display unit 250. The rotation amount sensing unit 213 may sense the number of turns of the display unit 250 wound on the outer circumferential surface of the inner case 238. This will be described later in more detail with reference to Figs. 3E and 3F.

Referring to Fig. 3E, the length sensing unit 211 may include four hall sensors H1 to H4. The four hall sensors are arranged on the inner circumferential surface of the inner case 238 or an inner space thereof along a circumferential direction of the inner case 238, while being spaced apart from each other by a fixed distance. Here, first to fourth hall sensors H1 to H4 sense movement of the rolling sensing unit 234 by sensing a change of magnetism in the circumferential direction of the inner case 238.

The arrows of Figs. 3E and 3F represent a rotation direction of the inner case 238. The first hall sensor H1 alone senses the rolling sensing unit 234 in the second operation state in which the display unit 250 is maximally exposed as the inner case 238 is rotated. Thereafter, when the inner case 238 is rotated counterclockwise, the display unit 250 is wound on the inner case 238, and the second to fourth hall sensors H2 to H4 sequentially sense the rolling sensing unit 234. As described above, the first to fourth hall sensors H1 to H4 provide information for measuring a length of the display unit 250 wound along the outer circumferential surface of the inner case 238. The control unit 290 can detect a sensor that lastly senses the rolling sensing unit 234 when the display unit 250 is wound or unwound. Accordingly, the control unit 290 can calculate the wound length or the unwound length of the display unit 250. This is the same for the case where the display unit 250 is wound on the inner case 238 by multiple turns.

When the display unit 250 is wound on the outer circumferential surface 238 in two or more layers, magnetism is changed in a radial direction of the inner case 238. Therefore, if a hall sensor for sensing the change is provided, the wound length of the display unit 250 may be measured more accurately.

For example, as illustrated in Fig. 3F, if two or more hall sensors are spaced apart from each other by a fixed distance in a radial direction of the inner case 238, a magnetism change of the rolling sensing unit 234 stacked in two or more layers on the outer circumferential surface of the inner case 238 may be sensed, so that the wound length of the display unit 250 may be calculated more accurately. Although Fig. 3F illustrates three hall sensors, i.e., fifth to seventh hall sensors H5 to H7, this is merely an example. That is, the fifth to seventh hall sensors H5 to H7 sense a magnetism change in a radial direction of the inner case 238 due to the rolling sensing unit 234.

In more detail, in the second operation state (i.e., the state illustrated in Fig. 3D), the control unit 290 can calculate the wound length of the display unit 250 using the first to fourth hall sensors H1 to H4 while the display unit 250 is wound in one layer on the inner case 238. When the display unit 250 is wound in two layers on the inner case 238, the fifth to seventh hall sensors H5 to H7 sense a change of magnetism in a radial direction. The control unit 290 can obtain the number of turns of the display unit 250 wound, using the magnetism change sensed by the fifth to seventh hall sensors H5 to H7. A length of the display unit 250 wound thereafter may be calculated using the first to fourth hall sensors H1 to H4, and, when the display unit 250 is stacked in three layers in a radial direction in which the fifth to seventh hall sensors H5 to H7 are arranged, the magnetism change is sensed by the fifth to seventh hall sensors H5 to H7.

As described above, the control unit 290 can calculate the length of the display unit 250 wound on the outer circumferential surface of the inner case 238 using the first to fourth hall sensors H1 to H4, and may calculate the number of turns of the display unit 250 wound on the outer circumferential surface of the inner case 283 using the fifth to seventh hall sensors H5 to H7.

According to another embodiment, the rollable display device 200-2 may be additionally provided with the upper case 240, the intermediate case 220, and the lower case 260 at another end portion of the display unit 250. The elements described above with reference to Fig. 3D may be included in the intermediate case 220. Therefore, a user may grip the rollable display device 200-2 with both hands to extend or reduce the display unit 250.

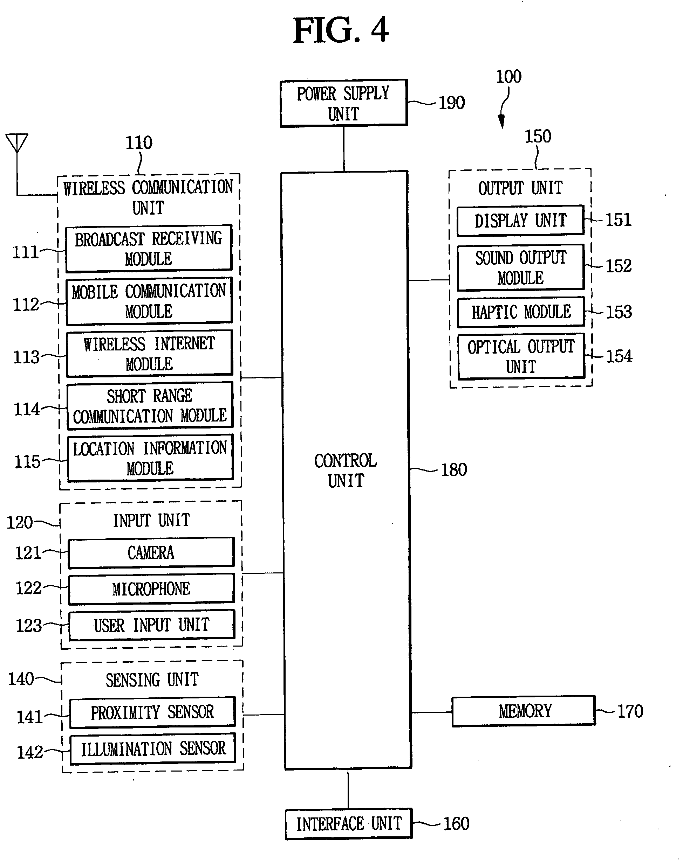

The flexible display device 200 may include all of a configuration of a mobile terminal 100 described with reference to Fig. 4. Then, a configuration of a mobile terminal in the flexible display device 200 will be described with reference to Fig. 4.

Mobile terminals described in this specification may include mobile phones, smartphones, laptop computers, terminals for digital broadcast, personal digital assistants (PDAs), portable multimedia players (PMPs), navigation systems, slate PCs, tablet PCs, ultrabooks, and wearable devices (for example, smartwatches, smart glasses, and head mounted displays (HMDs)).

However, it is apparent to those skilled in the art that configurations according to embodiments of the present invention disclosed in this specification are applicable to stationary terminals such as digital TVs, desktop computers, and digital signage, except for the case applicable to only mobile terminals.

Fig. 4 is a block diagram illustrating a mobile terminal according to an embodiment of the present invention. In this instance, the flexible display device 200 may include the components of a mobile terminal 100. Especially, the sensing unit 210 of the flexible display device 200 may perform a function of a sensing unit 140 of the mobile unit 100, the display unit 250 may perform a function of the display unit 151 of the mobile terminal 100, and the storage 270 may perform a function of a memory 170 of the mobile terminal 100.

The mobile terminal 100 may include a wireless communication unit 110, an input unit 120, the sensing unit 140, an output unit 150, an interface unit 160, the memory 170, a control unit 180, and a power supply unit 190. In implementing a mobile terminal, components shown in Fig. 4 are not necessary, so that a mobile terminal described in this specification may include components less or more than the components listed above.

In more detail, the wireless communication unit 110 in the components may include at least one module allowing wireless communication between the mobile terminal 100 and a wireless communication system, between the mobile terminal 100 and another mobile terminal 100, or between the mobile terminal 100 and an external server. Additionally, the wireless communication unit 110 may include at least one module connecting the mobile terminal 100 to at least one network.

The wireless communication unit 110 may include at least one of a broadcast receiving module 111, a mobile communication module 112, a wireless internet module 113, a short-range communication module 114, and a location information module 115.

The input unit 120 may include a camera 121 or an image input unit for image signal input, a microphone 122 or an audio input unit for receiving audio signal input, and a user input unit 123 (for example, a touch key and a mechanical key)) for receiving information from a user. Voice data or image data collected by the input unit 120 are analyzed and processed as a user's control command.

The sensing unit 140 may include at least one sensor for sensing at least one of information in a mobile terminal, environmental information around a mobile terminal, and user information. For example, the sensing unit 140 may include at least one of a proximity sensor 141, an illumination sensor 142, a touch sensor, an acceleration sensor, a magnetic sensor, a G-sensor, a gyroscope sensor, a motion sensor, an RGB sensor, an infrared (IR) sensor, a finger scan sensor, an ultrasonic sensor, an optical sensor (for example, the camera 121), a microphone (for example, the microphone 122), a battery gauge, an environmental sensor (for example, a barometer, a hygrometer, a thermometer, a radiation sensor, a thermal sensor, and a gas sensor), and a chemical sensor (for example, an electronic noise, a healthcare sensor, and a biometric sensor). Moreover, a mobile terminal disclosed in this specification may combines information sensed by at least two or more sensors among such sensors and may then utilize it.

The output unit 150 is used to generate a visual, auditory, or haptic output and may include at least one of a display unit 151, a sound output unit 152, a haptic module 153, and an optical output unit 154. The display unit 151 may be formed with a mutual layer structure with a touch sensor or formed integrally, so that a touch screen may be implemented. Such a touch screen may serve as the user input unit 123 providing an input interface between the mobile terminal 100 and a user and an output interface between the mobile terminal 100 and a user at the same time.

The interface unit 160 may serve as a path to various kinds of external devices connected to the mobile terminal 100. The interface unit 160 may include at least one of a wired/wireless headset port, an external charger port, a wired/wireless data port, a memory card port, a port connecting a device equipped with an identification module, an audio Input/Output (I/O) port, a video I/O port, and an earphone port. In correspondence to that an external device is connected to the interface unit 160, the mobile terminal 100 may perform an appropriate control relating to the connected external device.

Additionally, the memory 170 may store data supporting various functions of the mobile terminal 100. The memory 170 may store a plurality of application programs (for example, application programs or applications) running on the mobile terminal 100 and also data and commands for operations of the mobile terminal 100. At least part of such an application program may be downloaded from an external server through a wireless communication. Additionally, at least part of such an application program may be included in the mobile terminal 100 from the time of shipment in order to perform a basic function (for example, an incoming call, a transmission function, and a message reception) of the mobile terminal 100. Moreover, an application program may be stored in the memory 170 and installed on the mobile terminal 100, so that it may run to perform an operation (or a function) of the mobile terminal 100 by the control unit 180.

The control unit 180 may control overall operations of the mobile terminal 100 generally besides an operation relating to the application program. The control unit 180 may provide appropriate information or functions to a user or process them by processing signals, data, and information input/output through the above components or executing application programs stored in the memory 170.

Additionally, in order to execute an application program stored in the memory 170, the control unit 180 may control at least part of the components shown in Fig. 4. Furthermore, in order to execute the application program, the control unit 180 may combine at least two of the components in the mobile terminal 100 and may then operate it.

The power supply unit 190 may receive external power or internal power under a control of the control unit 180 and may then supply power to each component in the mobile terminal 100. The power supply unit 190 includes a battery and the battery may be a built-in battery or a replaceable battery.

At least part of the each component may operate cooperatively in order to implement operations, controls, or control methods of a mobile terminal 100 according to various embodiments of the present invention described below. Additionally, the operations, controls, or control methods of a mobile terminal 100 may be implemented on the mobile terminal 100 by executing at least one application program stored in the memory 170.

Hereinafter, prior to examining various embodiments implemented through the mobile terminal 100, the above-listed components are described in more detail with reference to Fig. 4.

First, in describing the wireless communication unit 110, the broadcast receiving module 111 of the wireless communication unit 110 may receive a broadcast signal and/or broadcast related information from an external broadcast management server through a broadcast channel. The broadcast channel may include a satellite channel and a terrestrial channel. At least two broadcast receiving modules for simultaneous broadcast reception for at least two broadcast channels or broadcast channel switching may be provided to the mobile terminal 100.

The mobile communication module 112 may transmit/receive a wireless signal to/from at least one of a base station, an external terminal, and a server on a mobile communication network established according to the technical standards or communication methods for mobile communication (for example, Global System for Mobile communication (GSM), Code Division Multi Access (CDMA), Code Division Multi Access 2000 (CDMA2000), Enhanced Voice-Data Optimized or Enhanced Voice-Data Only (EV-DO), Wideband CDMA (WCDMA), High Speed Downlink Packet Access (HSDPA), High Speed Uplink Packet Access (HSUPA), Long Term Evolution (LTE), and Long Term Evolution-Advanced (LTE-A)).

The wireless signal may include various types of data according to a voice call signal, a video call signal, or text/multimedia message transmission.

The wireless internet module 113 refers to a module for wireless internet access and may be built in or external to the mobile terminal 100. The wireless internet module 113 may be configured to transmit/receive a wireless signal in a communication network according to wireless internet technologies.

The wireless internet technology may include Wireless LAN (WLAN), Wireless-Fidelity (Wi-Fi), Wi-Fi Direct, Digital Living Network Alliance (DLNA), Wireless Broadband (WiBro), World Interoperability for Microwave Access (WiMAX), High Speed Downlink Packet Access (HSDPA), High Speed Uplink Packet Access (HSUPA), Long Term Evolution (LTE), and Long Term Evolution-Advanced (LTE-A) and the wireless internet module 113 transmits/receives data according at least one wireless internet technology including internet technology not listed above.

From the viewpoint that wireless internet access by WiBro, HSDPA, HSUPA, GSM, CDMA, WCDMA, LTE, and LTE-A is achieved through a mobile communication network, the wireless internet module 113 performing wireless internet access through the mobile communication network may be understood as one type of the mobile communication module 112.

The short-range communication module 114 may support short-range communication by using at least one of Bluetooth™, Radio Frequency Identification (RFID), Infrared Data Association (IrDA), Ultra Wideband (UWB), ZigBee, Near Field Communication (NFC), Wireless-Fidelity (Wi-Fi), Wi-Fi Direct, and Wireless Universal Serial Bus (USB) technologies. The short-range communication module 114 may support wireless communication between the mobile terminal 100 and a wireless communication system, between the mobile terminal 100 and another mobile terminal 100, or between networks including the mobile terminal 100 and another mobile terminal 100 (or an external server) through wireless area networks. The wireless area networks may be wireless personal area networks.

Here, the other mobile terminal 100 may be a wearable device (for example, a smart watch, a smart glass, and an HMD) that is capable of exchanging data (or interworking) with the mobile terminal 100. The short-range communication module 114 may detect (or recognize) a wearable device around the mobile terminal 100, which is capable of communicating with the mobile terminal 100 Furthermore, if the detected wearable device is a device authenticated to communicate with the mobile terminal 100, the control unit 180 may transmit at least part of data processed in the mobile terminal 100 to the wearable device through the short-range communication module 114. Accordingly, a user of the wearable device may use the data processed in the mobile terminal 100 through the wearable device. For example, according thereto, when a call is received by the mobile terminal 100, a user may perform a phone call through the wearable device or when a message is received by the mobile terminal 100, a user may check the received message.

The location information module 115 is a module for obtaining the location (or the current location) of a mobile terminal and its representative examples include a global positioning system (GPS) module or a Wi-Fi module. For example, the mobile terminal may obtain its position by using a signal transmitted from a GPS satellite through the GPS module. As another example, the mobile terminal may obtain its position based on information of a wireless access point (AP) transmitting/receiving a wireless signal to/from the Wi-Fi module, through the Wi-Fi module. If necessary, the position information module 115 may perform a function of another module in the wireless communication unit 110 in order to obtain data on the location of the mobile terminal substitutionally or additionally. The location information module 115 is a module for obtaining the position (or the current position) of the mobile terminal and is not limited to a module directly calculating and obtaining the position of the mobile terminal.

Then, the input unit 120 is used for inputting image information (or signal), audio information (or signal), data, or information input from a user and the mobile terminal 100 may include at least one camera 121 in order for inputting image information. The camera 121 processes image frames such as a still image or a video obtained by an image sensor in a video call mode or a capturing mode.

The processed image frame may be displayed on the display unit 151 or stored in the memory 170. Moreover, a plurality of cameras 121 equipped in the mobile terminal 100 may be arranged in a matrix structure and through the camera 121 having such a matrix structure, a plurality of image information having various angles or focuses may be input to the input terminal 100. Additionally, the plurality of cameras 121 may be arranged in a stereo structure to obtain the left and right images for implementing a three-dimensional image.

The microphone 122 processes external sound signals as electrical voice data. The processed voice data may be utilized variously according to a function (or an application program being executed) being performed in the mobile terminal 100. Moreover, various noise canceling algorithms for removing noise occurring during the reception of external sound signals may be implemented in the microphone 122.

The user input unit 123 is to receive information from a user and when information is input through the user input unit 123, the control unit may control an operation of the mobile terminal 100 to correspond to the input information. The user input unit 123 may include a mechanical input mechanism (or a mechanical key, for example, a button, a dome switch, a jog wheel, and a jog switch at the front, back or side of the mobile terminal 100) and a touch type input mechanism. As one example, a touch type input mechanism may include a virtual key, a soft key, or a visual key, which is displayed on a touch screen through software processing or may include a touch key disposed at a portion other than the touch screen. Moreover, the virtual key or visual key may have various forms and may be disposed on a touch screen and for example, may include graphic, text, icon, video, or a combination thereof.

Moreover, the sensing unit 140 may sense at least one of information in a mobile terminal, environmental information around a mobile terminal, and user information and may then generate a sensing signal corresponding thereto. Based on such a sensing signal, the control unit 180 may control the drive or control of the mobile terminal 100 or may perform data processing, functions, or operations relating to an application program installed in the mobile terminal 100. Representative sensors among various sensors included in the sensing unit 140 will be described in more detail.

First, the proximity sensor 141 refers to a sensor detecting whether there is an object approaching a predetermined detection surface or whether there is an object around by using the strength of an electromagnetic field or infrared, without mechanical contact. The proximity sensor 141 may disposed in an inner area of a mobile terminal surrounded by the touch screen or around the touch screen.

Examples of the proximity sensor 141 may include a transmission-type photoelectric sensor, a direct reflective-type photoelectric sensor, a mirror reflective-type photoelectric sensor, a high-frequency oscillation-type proximity sensor, a capacitive-type proximity sensors, a magnetic-type proximity sensor, and an infrared proximity sensor. If the touch screen is a capacitive type, the proximity sensor 141 may be configured to detect the proximity of an object by changes in an electric field according to the proximity of the object having conductivity. In this instance, the touch screen (or a touch sensor) itself may be classified as a proximity sensor.

Moreover, for convenience of description, an action for recognizing the position of an object on the touch screen as the object is close to the touch screen without contacting the touch screen is called "proximity touch" and an action that the object actually contacts the touch screen is called "contact touch". A position that an object is proximity-touched on the touch screen is a position that the object vertically corresponds to the touch screen when the object is proximity-touched. The proximity sensor 141 may detect a proximity touch and a proximity touch pattern (for example, a proximity touch distance, a proximity touch direction, a proximity touch speed, a proximity touch time, a proximity touch position, and a proximity touch movement state).

Moreover, the control unit 180 processes data (for information) corresponding to a proximity touch operation and a proximity touch pattern, detected through the proximity sensor 141, and furthermore, may output visual information corresponding to the processed data on the touch screen. Furthermore, according to whether a touch for the same point on the touch screen is a proximity touch or a contact touch, the control unit 180 may control the mobile terminal 100 to process different operations or data (or information).

The touch sensor detects a touch (or a touch input) applied to the touch screen (or the display unit 151) by using at least one of various touch methods, for example, a resistive film method, a capacitive method, an infrared method, an ultrasonic method, and a magnetic field method.

For example, the touch sensor may be configured to convert a pressure applied to a specific portion of the touch screen or changes in capacitance occurring at a specific portion into electrical input signals. The touch sensor may be configured to detect a position and area that a touch target applying a touch on the touch screen touches the touch sensor, a pressured when touched, and a capacitance when touched. Here, the touch target, as an object applying a touch on the touch sensor, may be a finger, a touch pen, a stylus pen, or a pointer, for example.

In such a manner, when there is a touch input on the touch sensor, signal(s) corresponding thereto are sent to a touch controller. The touch controller processes the signal(s) and then transmits corresponding data to the control unit 180. Therefore, the control unit 180 may recognize which area of the display unit 151 is touched. Herein, the touch controller may be an additional component separated from the control unit 180 or may be the control unit 180 itself.

Moreover, the control unit 180 may perform different controls or the same control according to types of a touch target touching the touch screen (or a touch key equipped separated from the touch screen). Whether to perform different controls or the same control according to types of a touch target may be determined according to a current operation state of the mobile terminal 100 or an application program in execution.

Moreover, the above-mentioned touch sensor and proximity sensor are provided separately or combined and may thus sense various types of touches, for example, short (or tap) touch), long touch, multi touch, drag touch, flick touch, pinch-in touch, pinch-out touch, swipe touch, and hovering touch for the touch screen.

The ultrasonic sensor may recognize position information of a detection target by using ultrasonic waves. Moreover, the control unit 180 may calculate the position of a wave source through information detected by an optical sensor and a plurality of ultrasonic sensors. The position of the wave source may be calculated by using the property that light is much faster than ultrasonic wave, that is, a time that light reaches an optical signal is much shorter than a time that ultrasonic wave reaches an ultrasonic sensor. In more detail, the position of the wave source may be calculated by using a time difference with a time that ultrasonic wave reaches by using light as a reference signal.

Moreover, the camera 121 described as a configuration of the input unit 120 may include at least one of a camera sensor (for example, CCD and CMOS), a photo sensor (or an image sensor), and a laser sensor.

The camera 121 and the laser sensor may be combined to detect a touch of a detection target for a three-dimensional image. The photo sensor may be stacked on a display device and is configured to scan a movement of a detection target close to the touch screen. In more detail, the photo sensor mounts a photo diode and a transistor (TR) in a row/column and scans content disposed on the photo sensor by using an electrical signal changing according to an amount of light applied to the photo diode. That is, the photo sensor may calculate the coordinates of a detection target according to the amount of change in light and through this, may obtain the position information of the detection target.

The display unit 151 may display (output) information processed in the mobile terminal 100. For example, the display unit 151 may display execution screen information of an application program running on the mobile terminal 100 or user interface (UI) and graphic user interface (GUI) information according to such execution screen information.

Additionally, the display unit 151 may be configured as a three-dimensional display unit displaying a three-dimensional image. A three-dimensional display method, for example, a stereoscopic method (a glasses method), an autostereoscopic (no glasses method), a projection method (a holographic method) may be applied to the three-dimensional display unit

The sound output unit 152 may output audio data received from the wireless communication unit 110 or stored in the memory 170 in a call signal reception or call mode, a recording mode, a voice recognition mode, or a broadcast reception mode. The sound output unit 152 may output a sound signal relating to a function (for example, a call signal reception sound and a message reception sound) performed by the mobile terminal 100. The sound output unit 152 may include a receiver, a speaker, and a buzzer.

The haptic module 153 generates various haptic effects that a user can feel. A representative example of a haptic effect that the haptic module 153 generates is vibration. The intensity and pattern of vibration generated by the haptic module 153 may be controlled by a user's selection or a setting of a control unit. For example, the haptic module 153 may synthesize and output different vibrations or output different vibrations sequentially.

The haptic module 153 may generate various haptic effects, for example, effects by a pin arrangement moving vertical to a contact skin surface, injection power or suction power of air through an injection port or a suction port, rubbing a skin surface, electrode contact, stimulus of electrostatic force and effects by the reproduction of cold/warm sense by using a device absorbing or emitting heat.

The haptic module 153 may be implemented to deliver a haptic effect through a direct contact and also allow a user to feel a haptic effect through a muscle sense such as a finger or an arm. The haptic module 153 may be more than two according to a configuration aspect of the mobile terminal 100.

The optical output unit 154 outputs a signal for notifying event occurrence by using light of a light source of the mobile terminal 100. An example of an event occurring in the mobile terminal 100 includes message reception, call signal reception, missed calls, alarm, schedule notification, e-mail reception, and information reception through an application.

A signal output from the optical output unit 154 is implemented as a mobile terminal emits single color of multi-color to the front or the back. The signal output may be terminated when a mobile terminal detects user's event confirmation.

The interface unit 160 may serve as a path to all external devices connected to the mobile terminal 100. The interface unit 160 may receive data from an external device, receive power and deliver it to each component in the mobile terminal 100, or transmit data in the mobile terminal 100 to an external device. For example, the interface unit 160 may include a wired/wireless headset port, an external charger port, a wired/wireless data port, a memory card port, a port connecting a device equipped with an identification module, an audio I/O port, a video I/O port, and an earphone port.

Moreover, the identification module, as a chip storing various information for authenticating usage authority of the mobile terminal 100, may include a user identity module (UIM), a subscriber identity module (SIM), and a universal subscriber identity module (USIM). A device equipped with an identification module (hereinafter referred to as an identification device) may be manufactured in a smart card form. Accordingly, the identification device may be connected to the terminal 100 through the interface unit 160.

Additionally, when the mobile terminal 100 is connected to an external cradle, the interface unit 160 may become a path through which power of the cradle is supplied to the mobile terminal 100 or a path through which various command signals input from the cradle are delivered to the mobile terminal 100 by a user. The various command signals or the power input from the cradle may operate as a signal for recognizing that the mobile terminal 100 is accurately mounted on the cradle.

The memory 170 may store a program for an operation of the control unit 180 and may temporarily store input/output data (for example, a phone book, a message, a still image, and a video). The memory 170 may store data on various patterns of vibrations and sounds output during a touch input on the touch screen.

The memory 170 may include at least one type of storage medium among flash memory type, hard disk type, Solid State Disk (SSD) type, Silicon Disk Drive (SDD) type, multimedia card micro type, card type memory (for example, SD or XD memory type), random access memory (RAM) type, static random access memory (SRAM) type, read-only memory (ROM) type, electrically erasable programmable read-only memory (EEPROM) type, programmable read-only memory (PROM) type, magnetic memory type, magnetic disk type, and optical disk type. The mobile terminal 100 may operate in relation to a web storage performing a storage function of the memory 170 on internet.

Moreover, as mentioned above, the control unit 180 may control operations relating to an application program and overall operations of the mobile terminal 100 in general. For example, if a state of the mobile terminal 100 satisfies set conditions, the control unit 180 may execute or release a lock state limiting an output of a control command of a user for applications.

Additionally, the control unit 180 may perform a control or processing relating to a voice call, data communication, and a video call may perform pattern recognition processing for recognizing handwriting input or drawing input on the touch screen as a text and an image, respectively. Furthermore, the control unit 180 may use at least one or a combination of the above components to perform a control in order to implement various embodiments described below on the mobile terminal 100.

The power supply unit 190 may receive external power or internal power under a control of the control unit 180 and may then supply power necessary for an operation of each component. The power supply unit 190 includes a battery. The battery is a rechargeable built-in battery and may be detachably coupled to a terminal body in order for charging.

Additionally, the power supply unit 190 may include a connection port and the connection port may be configured as one example of the interface unit 160 to which an external charger supplying power for charging of the battery is electrically connected.

As another example, the power supply unit 190 may be configured to charge a battery through a wireless method without using the connection port. In this instance, the power supply unit 190 may receive power from an external wireless power transmission device through at least one of an inductive coupling method based on a magnetic induction phenomenon, and a magnetic resonance coupling method based on an electromagnetic resonance phenomenon. Moreover, various embodiments below may be implemented in a computer or device similar thereto readable medium by using software, hardware, or a combination thereof.

Then, a communication system using the mobile terminal 100 is described according to an embodiment of the present invention. First, the communication system may use different wireless interfaces and/or physical layers. For example, a wireless interface available to the communication system may include Frequency Division Multiple Access (FDMA), Time Division Multiple Access (TDMA), Code Division Multiple Access (CDMA), and Universal Mobile Telecommunications Systems (UMTS) (especially, Long Term Evolution (LTE), Long Term Evolution-Advanced (LTE-A), and Global System for Mobile Communications (GSM)).

Hereinafter, for convenience of description, description is made limited to CDMA. However, it is apparent that the present invention is applicable to all communication systems including Orthogonal Frequency Division Multiplexing (OFDM) wireless communication systems in addition to CDMA wireless communication systems.

The CDMA wireless communication system may include at least one terminal 100, at least one base station (BS) (it may be referred to as Node B or Evolved Node B), at least one base station controllers (BSCs), and a mobile switching center (MSC). MSC may be configured to be connected to Public Switched Telephone Network (PSTN) and BSCs. BSCs may be connected being paired with a BS through a backhaul line. The backhaul line may be provided according to at least one of E1/T1, ATM, IP, PPP, Frame Relay, HDSL, ADSL, and xDSL. Accordingly, a plurality of BSCs may be included in a CDMA wireless communication system.

Each of a plurality of BSs may include at least one sensor and each sensor may include an omni-directional antenna or an antenna indicating a specific radial direction from a BS. Additionally, each sensor may include at least two antennas in various forms. Each BS may be configured to support a plurality of frequency allocations and each of the plurality of frequency allocations may have a specific spectrum (for example, 1.25MHz, 5MHz, and so on).

The intersection of a sector and a frequency allocation may be referred to as a CDMA channel. A BS may be referred to as a Base Station Transceiver Subsystem (BTS). In such a case, one BSC and at least one BS together may be referred to as "BS". A BS may also represent "cell site". Additionally, each of a plurality of sectors for a specific BS may be referred to as a plurality of cell sites.

A Broadcasting Transmitter (BT) transmits broadcast signals to the terminals 100 operating in a system. The broadcast reception module 111 shown in Fig. 36 is provided in the terminal 100 for receiving broadcast signals transmitted from the BT.

Additionally, GPS may be linked to a CDMA wireless communication system in order to check the location of the mobile terminal 100. Then, a satellite helps obtaining the location of the mobile terminal 100. Useful location information may be obtained by at least one satellite. Herein, the location of the mobile terminal 100 may be traced by using all techniques for tracing the location in addition to GPS tracking technique. Additionally, at least one GPS satellite may be responsible for satellite DMB transmission selectively or additionally.

The location information module 115 in a mobile terminal is for detecting and calculating the position of the mobile terminal and its representative example may include a GPS module and a Wi-Fi module. If necessary, the position information module 115 may perform a function of another module in the wireless communication unit 110 in order to obtain data on the location of the mobile terminal substitutionally or additionally.

The GPS module 115 may calculate information on a distance from at least three satellites and accurate time information and then apply triangulation to the calculated information, in order to accurately calculate the 3D current location information according to latitude, longitude, and altitude. A method for calculating location and time information by using three satellites and correcting errors of the calculated location and time information by using another one satellite is being widely used. Additionally, the GPS module 115 may speed information as continuously calculating the current location in real time. However, it is difficult to accurately measure the location of a mobile terminal by using a GPS module in a shadow area of a satellite signal such as a room. Accordingly, in order to compensate for the measurement of a GPS method, a Wi-Fi Positioning System (WPS) may be utilized.

WPS is a technique for tracking the location of the mobile terminal 100 by using a Wi-Fi module in the mobile terminal 100 and a wireless Access Point (AP) for transmitting or receiving wireless signals to or from the Wi-Fi module and may mean a Wireless Local Area Network (WLAN) based location measurement technique using Wi-Fi.

A Wi-Fi location tracking system may include a Wi-Fi location measurement server, a mobile terminal 100, a wireless AP connected to the mobile terminal 100, and a database for storing arbitrary wireless AP information. The mobile terminal 100 in access to a wireless AP may transmit a location information request message to a Wi-Fi location measurement server.

The Wi-Fi location measurement server extracts information of a wireless AP connected to the mobile terminal 100 based on a location information request message (or signal) of the mobile terminal 100. Information of a wireless AP connected to the mobile terminal 100 may be transmitted to the Wi-Fi location measurement server through the mobile terminal 100 or may be transmitted from a wireless AP to a Wi-Fi location measurement server.

Based on the location information request message of the mobile terminal 100, the extracted information of a wireless AP may be at least one of MAC Address, Service Set Identification (SSID), Received Signal Strength Indicator (RSSI), Reference Signal Received Power (RSRP), Reference Signal Received Quality (RSRQ), channel information, Privacy, Network Type, Signal Strength, and Noise Strength.

As mentioned above, the Wi-Fi position measurement server may extract wireless AP information corresponding to a wireless AP that the mobile terminal 100 access from a pre-established database by using information of the wireless AP connected to the mobile terminal 100. In addition, information of arbitrary wireless APs stored in the database may information such as MAC Address, SSID, channel information, Privacy, Network Type, latitude and longitude coordinates of a wireless AP, a building name where a wireless AP is located, the number of floors, indoor detailed location (GPS coordinates available), the address of the owner of an AP, and phone numbers. In addition, in order to remove a mobile AP or a wireless AP provided using illegal MAC address during a measurement process, a Wi-Fi location measurement server may extract only a predetermined number of wireless AP information in high RSSI order.

Then, the Wi-Fi location measurement server may extract (or analyze) the location information of the mobile terminal 100 by using at least one wireless AP information extracted from the database. By comparing the included information and the received wireless AP information, location information of the mobile terminal 100 is extracted (or analyzed).

As a method of extracting (or analyzing) the location information of the motile terminal 100, a Cell-ID method, a finger-print method, a triangulation method, and a landmark method may be used. The Cell-ID method is a method for determining the location of a wireless AP having the strongest signal intensity in neighbor wireless AP information that a mobile terminal collects as the location of the mobile terminal. Implementation is simple, no additional cost is required, and location information is obtained quickly but when the installation density of wireless APs is low, measurement precision is poor.

The finger-print method is a method for collecting signal intensity information by selecting a reference location from a service area and estimating the location through signal intensity information transmitted from a mobile terminal based on the collected information. In order to use the finger-print method, there is a need to provide a database for storing propagation characteristics in advance.

The triangulation method is a method for calculating the location of a mobile terminal based on a distance between coordinates of at least three wireless APs and a mobile terminal. In order to measure a distance between a mobile terminal and a wireless AP, a signal intensity converted into distance information, Time of Arrival (ToA), Time Difference of Arrival (TDoA), and Angle of Arrival (AoA) may be used.

The landmark method is a method for measuring the location of a mobile terminal by using a landmark transmitter knowing the location. In addition to the listed methods, a variety of algorithms may be utilized as methods for extracting (or analyzing) the location information of a mobile terminal.

As the extracted location information of the mobile terminal 100 is transmitted to the mobile terminal 100 through the Wi-Fi location measurement server, the mobile terminal 100 may obtain the location information.

As connected to at least one wireless AP, the mobile terminal 100 may obtain location information. In addition, the number of wireless APs, which are required for obtaining the location information of the mobile terminal 100, may vary according to a wireless communication environment where the mobile terminal 100 is located.

Then, various embodiments for an operating method of the flexible display device 200 are described. Embodiments of the present invention may be applied to the stretchable display device 200_1 described with reference to Figs. 2A to 2B and the rollable display device 200_2 described with reference to Figs. 3A to 3C.

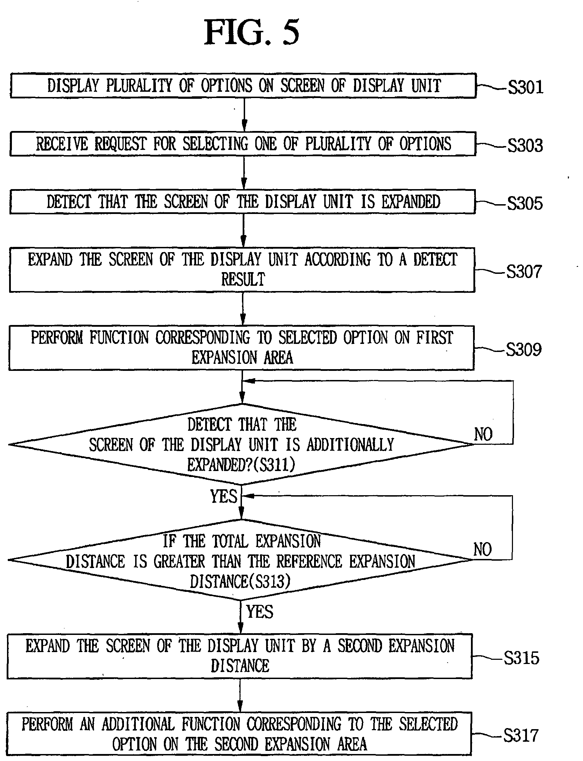

FIG. 5 is a flowchart illustrating an operating method of a flexible display device according to another embodiment of the present invention. The control unit 290 of the flexible display device 200 controls the display unit 250 thereby displaying a plurality of options for controlling functions of the flexible display device 200 on the screen of the display unit 250 in operation S301. The control unit 290 can receive an option display command and may display a plurality of options on the display unit 250 according to the received option display command.

Each of a plurality of options may be used to provide a function corresponding to each option as the display unit 250 is stretched. The plurality of options may include a size adjustment option, a more viewing option, a menu setting option, and a move option. The size adjustment option is an option for enlarging or reducing the size of information displayed on the screen of the display unit 250 as the display unit 250 is stretched. The more viewing option is an option for additionally displaying information provided from the screen of the display unit 250 as the display unit 250 is expanded.

The menu setting option is an option for using or setting information displayed on the screen of the display unit 250 as the display unit 250 is expanded. The move option is an option for moving information displayed on the screen of the display unit 250 to an expanded area as the display unit 250 is stretched. According to an embodiment of the present invention, only the four options are described but these are just exemplary options.

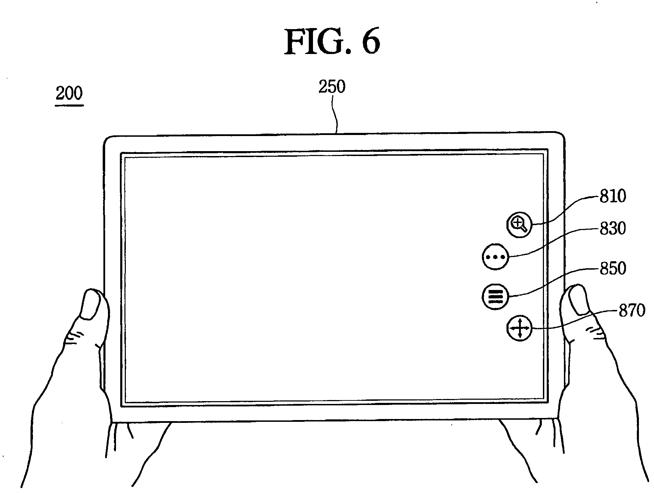

According to an embodiment of the present invention, the control unit 290 can be displayed on an application execution screen that is a screen displayed as a specific application installed at the flexible display device 200 is executed. In more detail, when receiving an option display command while an application execution screen is displayed through the display unit 250, the control unit 290 can control the display unit 250 to display a plurality of options on the application execution screen. Operation S301 will be described with reference to Fig. 6.

Fig. 6 is a view of displaying a plurality of options on a screen of a flexible display device according to an embodiment of the present invention. Referring to Fig. 6, the control unit 290 of the flexible display device 200 can receive an option display command and may display a plurality of options on the screen in response to the received option display command. The plurality of options may include a size adjustment option 810, a more viewing option 830, a menu setting option 850, and a move option 870.

As each option is selected, the control unit 290 can perform a function corresponding to a corresponding option in linkage with a stretch of the display unit 250. This will be described later. A plurality of options may be displayed on an execution screen of a specific application installed on the display device 200. That is, when an option display command is received when an execution screen of an application is displayed, a plurality of options may be displayed overlapping the execution screen of the application.

Again, Fig. 5 is described. The control unit 290 receives a request for selecting one of the plurality of options in operation S303. When one of the plurality of options is selected, the control unit 290 can perform a function corresponding to the selected option as the display unit 250 is stretched. This will be described later.

The control unit 290 detects that the screen of the display unit 250 is expanded in operation S305 and expands the screen of the display unit 250 by a first expansion distance based on a detect result in operation S307. Expanding the display unit 250 may represent enlarging the screen size of the display unit 250.

The control unit 290 can perform a function corresponding to the option selected in operation S303 on the first expansion area of the display unit 250 that is an area corresponding to the first expansion distance in operation S309.

When a size adjustment option is selected according to an embodiment of the present invention, the control unit 290 can control the display unit 250 to enlarge content, which is displayed on the screen of the display unit 250 before the expansion, by the first expansion area and display the enlarged content.

When a more viewing option is selected according to another embodiment of the present invention, the control unit 290 can control the display unit 250 to display information, which is not displayed on the screen of the display unit 250 before the expansion, on the first expansion area.

When a menu setting option is selected according to another embodiment of the present invention, the control unit 290 can control the display unit 250 to provide menus linked to the screen of the display unit 250 before the expansion.

When a move option is selected according to another embodiment of the present invention, the control unit 290 can control the display unit 250 to move information displayed on the screen of the display unit 250 before the expansion to an expanded area. As each option is selected and the screen size of the display unit 250 expands, a process for performing a function corresponding to the selected option is described in more detail later.

The control unit 290 can detect that the screen of the display unit 250 is additionally expanded when the display unit 250 expands by a first expansion distance in operation S311 and when the screen of the display unit 250 is additionally expanded, and checks whether a total expansion distance expanded is greater than a reference expansion distance in operation S313.

According to an embodiment of the present invention, the expanded direction of the screen of the display unit 250 may be identical to the expanded direction of the screen of the display unit 250 in operation S305.

According to an embodiment of the present invention, a reference expansion distance may be an expansion distance that is a reference for providing a different type of information according an expansion degree that represents a degree by which the display unit 250 expands. Information provided from a first expansion area that is an expanded area when a total expansion distance of the display unit 250 is less than a reference expansion distance may be different from information provided from a second expansion area that is an expanded area except for the first expansion area when an expanded distance of the display unit 250 is greater than a reference expansion distance. This will be described later.

According to another embodiment of the present invention, the reference expansion distance may be the first expansion distance. If the total expansion distance is greater than the reference expansion distance in operation S313, the control unit 290 expands the screen of the display unit 250 by a second expansion distance operation S315.

The control unit 290 can perform an additional function corresponding to the option selected in operation S303 on the second expansion area that is an area corresponding to the second expansion distance in operation S317.

Hereinafter, operation S301 to operation S317 are described through various embodiments of the present invention. Additionally, it is assumed and described hereinafter that the flexible display device 200 is the stretchable display device 200_1 but as mentioned above, the present invention is applicable to the rollable display device 200_2.

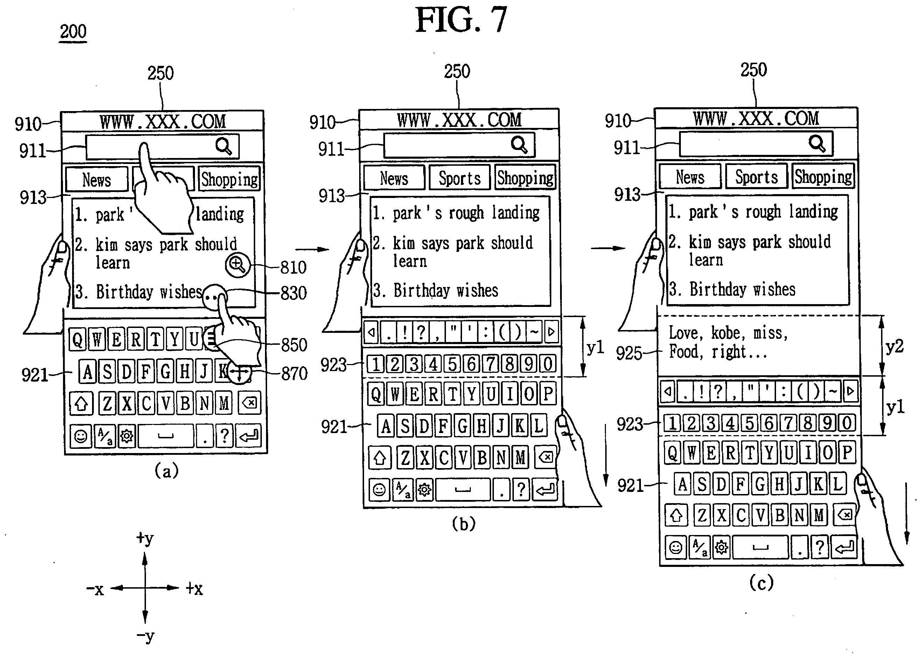

Fig. 7 is a view illustrating information provided from each expansion area according to a degree in which a display unit expands when a more viewing option is selected from a plurality of options according to an example useful for understanding the present invention.

Referring to Fig. 7A, the display unit 250 of the flexible display device 200 is in a state before expansion and displays a website screen 910 according to an execution of an internet application. The website screen 910 may include an information search window 911 for searching for information and an information providing window 913 including various information provided from a corresponding website. When a touch input for selecting the information search window 911, the control unit 290 can control the display unit 250 to display a keyboard window 921 for inputting alphabets on the website screen 910. Additionally, when an option display command is received when the keyboard window 921 is activated, the control unit 290 can control the display unit 250 to display a plurality of options 810, 830, 850, and 870 on the website screen 910.

When the more viewing option 830 is selected when the keyboard window 921 is displayed and the display unit 250 is expanded in a -y axis direction, the control unit 290, as shown in Fig. 7B, can expand the display unit 250 by a first expansion distance y1 in the -y axis direction. The first expansion distance y1 may be a distance corresponding to the intensity of a force applied to the display unit 250.

That is, the control unit 290 can expand the display unit 250 by the first expansion area 923 corresponding to the first expansion distance y1. Herein, the first expansion distance y1 may be the reference expansion distance described in operation S313. The control unit 290 can control the display unit 250 to display at least one of a plurality of numeric buttons and a plurality of symbol buttons, which are not displayed on the keyboard window 921.

When the display unit 250 is additionally expanded in the -y axis direction when the display unit 250 expands by the first expansion distance y1, the control unit 290, as shown in Fig. 7C, may additionally expand the display unit 250 by a second expansion distance y2. The control unit 290 can expand the display unit 250 by the second expansion area 925 corresponding to the second expansion distance y2. Input buttons not displayed on the keyboard window 921 may not be displayed on the second expansion area 925. That is, words and sentences, which are previously input to the information search window 911, may be displayed in recently input order in the second expansion area 925.

As another example, text messages received from the other parties and various notification information may be displayed in the second expansion area 925. In such a way, information displayed in the expanded first expansion area 923 when the expansion distance of the display unit 250 is greater than the reference expansion distance may be different from information displayed in the expanded second expansion area 925 when the expansion distance of the display unit 250 is less than the reference expansion distance.

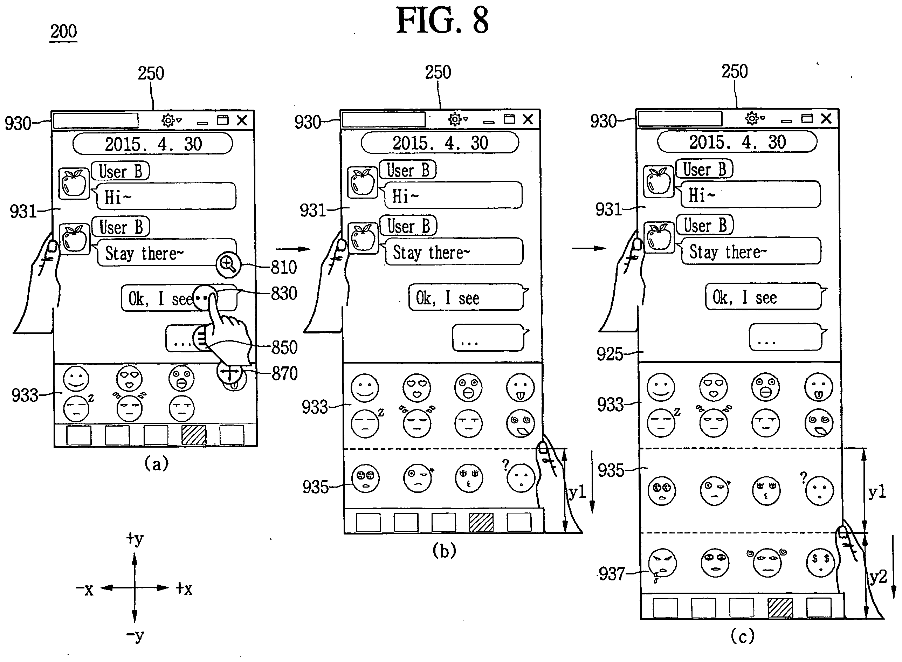

Next, Fig. 8 is described. In particular, Fig. 8 is a view illustrating information provided from each expansion area according to a degree in which a display unit expands when a more viewing option is selected from a plurality of options according to another example useful for understanding the present invention.

Referring to Fig. 8A, the display unit 250 of the flexible display device 200 is in a state before expansion and displays a message application execution screen 930 according to an execution of a message application. The message application execution screen 930 may include a dialog content providing window 931 for displaying dialog content between a user and the other party and a dialog input window 933 for inputting a dialog.

When an emoticon load command is received on the dialog input window 933, a plurality of emoticons may be displayed on the dialog input window 933. When an option display command is received when the plurality of emoticons are displayed on the dialog input window 933, the control unit 290 can control the display unit 250 to display a plurality of options 810, 830, 850, and 870 on the message application execution screen 930.

When the more viewing option 830 is selected when the dialog input window 933 is displayed and the display unit 250 is expanded in the -y axis direction that is detected, the control unit 290, as shown in Fig. 8B, can expand the display unit 250 by a first expansion distance y1 in the -y axis direction. The first expansion distance y1 may be a distance corresponding to the intensity of a force applied to the display unit 250.

That is, the control unit 290 can expand the display unit 250 by the first expansion area 935 corresponding to the first expansion distance y1. Herein, the first expansion distance y1 may be the reference expansion distance described in operation S313. The control unit 290 can control the display unit 250 to display a plurality of emoticons, which are not displayed on the dialog input window 933, in the first expansion area 935.

. When the display unit 250 is additionally expanded that is detected in the -y axis direction when the display unit 250 expands by the first expansion distance y1, the control unit 290, as shown in Fig. 8C, may additionally expand the display unit 250 by a second expansion distance y2. The control unit 290 can expand the display unit 250 by the second expansion area 925 corresponding to the second expansion distance y2. Additional emoticons, which are not displayed on the dialog input window 933 and the first expansion area 935, may be displayed on the second expansion area 925.

Information displayed in the expanded first expansion area 923 when the expansion distance of the display unit 250 is greater than the reference expansion distance may be different from information displayed in the expanded second expansion area 925 when the expansion distance of the display unit 250 is less than the reference expansion distance.

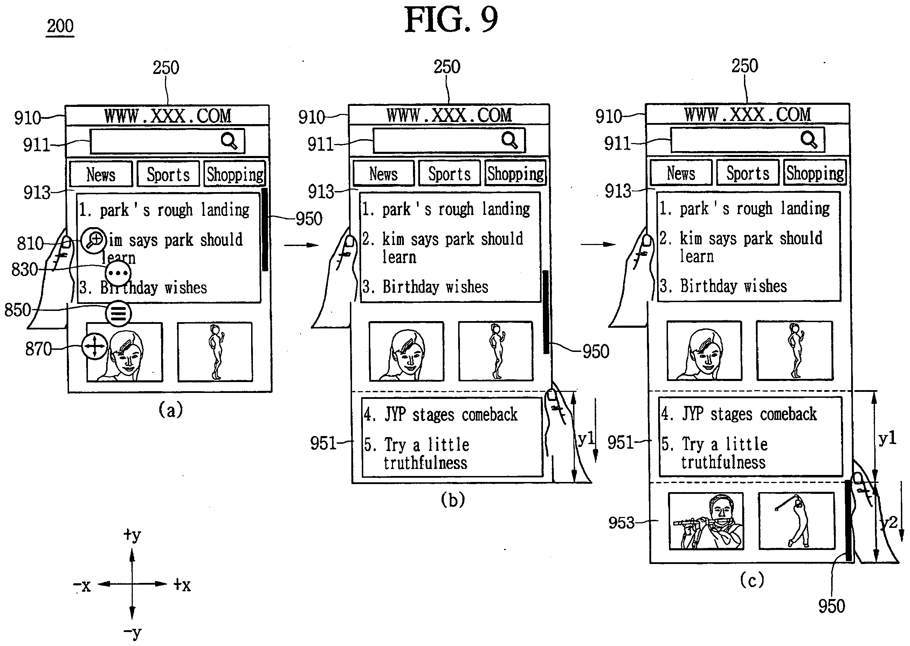

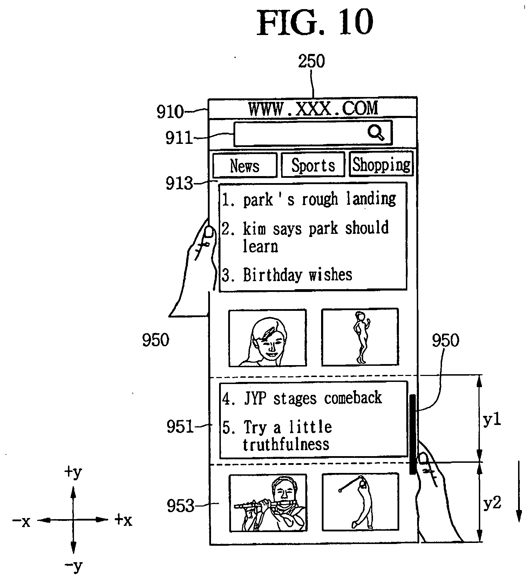

Next, Figs. 9 to 10 are described. In particular, Figs. 9 and 10 are views illustrating relations between the expansion and the scroll bar of a display unit when a more viewing option is selected from a plurality of options according to another example useful for understanding the present invention.

Referring to Fig. 9A, the display unit 250 of the flexible display device 200 is in a state before expansion and displays a website screen 910 according to an execution of an internet application. The website screen 910 may include an information search window 911 for searching for information, an information providing window 913 including various information provided from a corresponding website, and a scroll bar 950 moving as the screen of the display unit 250 scrolls. The scroll bar 950 may be an indicator representing whether there is information that cannot be displayed on the current screen of the display unit 250. The scroll bar 950 may be disposed at the right or bottom of the website screen 910.

When an option display command is received when the website screen 910 is displayed, the control unit 290 can control the display unit 250 to display a plurality of options 810, 830, 850, and 870 on the website screen 910. If expansion of the display unit 250 is detected in the -y axis direction after a request for selecting the more viewing option 830 is received, the control unit 290, as shown in Fig. 9B, may expand the display unit 250 by a first expansion distance y1 in the -y axis direction.

The first expansion distance y1 may be a distance corresponding to the intensity of a force applied to the display unit 250. That is, the control unit 290 can expand the display unit 250 by the first expansion area 951 corresponding to the first expansion distance y1. Herein, the first expansion distance y1 may be the reference expansion distance described in operation S313. The control unit 290 can control the display unit 250 to display additional information, which is not displayed on the website screen 910 before the expansion, on the first expansion area 951. Simultaneously, the control unit 190 may move the scroll bar 950 by the first expansion distance y1 in the -y axis direction.

When the display unit 250 is additionally expanded in the -y axis direction when the display unit 250 expands by the first expansion distance y1, the control unit 290, as shown in Fig. 9C, may additionally expand the display unit 250 by a second expansion distance y2. The control unit 290 can expand the display unit 250 by the second expansion area 953 corresponding to the second expansion distance y2. Simultaneously, the control unit 190 may move the scroll bar 950 by the second expansion distance y2 in the -y axis direction. Additional information, which is not displayed on the website screen 910 before the display unit 250 expands by the first expansion area 951, may be displayed on the second expansion area 953.

According to an example useful for understanding the present invention, a distance that the display unit 250 expands to the maximum in the -y axis direction may be greater than the sum of the first expansion distance y1 and the second expansion distance y2. In this instance, all displayable information is displayed on the current website screen 910 and also the scroll bar 950 cannot move in the -y axis direction further more. In this instance, all displayable information is displayed on the current website screen 910 and also the scroll bar 250 cannot move in the -y axis direction further more.

According to another example useful for understanding the present invention, a distance that the display unit 250 expands to the maximum in the -y axis direction may be the sum of the first expansion distance y1 and the second expansion distance y2. In this instance, all displayable information may not be displayed on the current website screen 910. This will be described with reference to Fig. 10.

Fig. 10 is described under the assumption that Fig. 10 is a process after Figs. 9A and 9B. Additionally, it is assumed in Fig. 10 that a distance that the display unit 250 expands to the maximum in the -y axis direction is the sum of the first expansion distance y1 and the second expansion distance y2 and all displayable information is not displayed on the current website screen 910.

Since the display unit 250 expands to the maximum expansion distance and there is additional displayable information on the current website screen 910, the control unit 290 can dispose the scroll bar 950 at a position spaced a predetermined distance from the lowest bottom end of the website screen 910. Through this, a user may check whether there is information to be additionally displayed on the website screen 910. A user may check information not displayed on the website screen 910 of Fig. 10 by moving the website screen 910 through a touch input.

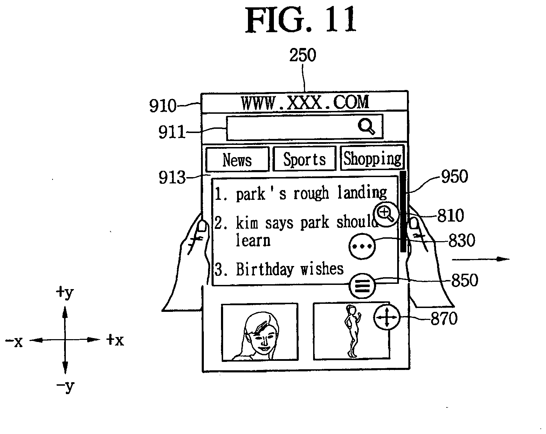

Next, Figs. 11 to 13 are described. In particular, Figs. 11 to 13 are views illustrating information provided as a display unit expands when a more viewing option is selected from a plurality of options according to another example useful for understanding the present invention.

Especially, Figs. 11 to 13 are views illustrating information provided as the display unit 250 expands In the +x axis direction when the scroll bar 950 moves only in the +y axis or -y axis direction and the website screen 910 is displayed. First, referring to Fig. 11, the display unit 250 of the flexible display device 200 is in a state before expansion and displays a website screen 910.

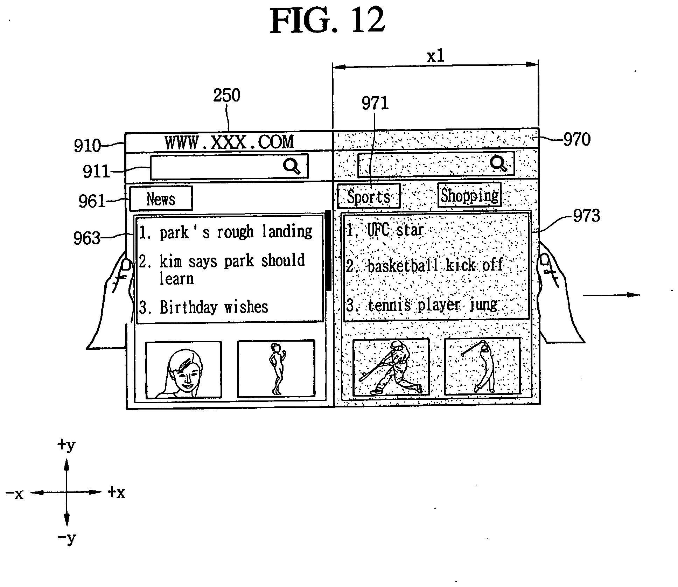

The website screen 910 may include an information search window 911, a news tab 961, a sports tab 971, a shopping tab 981, and an information providing window 963. As shown in Fig. 11, the news tab 961 is selected and news related articles are displayed on the information providing window 963. When an option display command is received, the control unit 290 can control the display unit 250 to display a plurality of options 810, 831, 850, and 870 on the website screen 910. If expansion of the display unit 250 is detected in the +x axis direction after a request for selecting the more viewing option 830 is received, the control unit 290, as shown in Fig. 12, may expand the display unit 250 by a first expansion distance x1 in the +x axis direction.

The first expansion distance x1 may be a distance corresponding to the intensity of a force applied to the display unit 250. The control unit 290 can expand the display unit 250 by the first expansion area 970 corresponding to the first expansion distance x1. Herein, the first expansion distance x1 may be the reference expansion distance described in operation S315. As the display unit 250 expands by the first expansion distance x1, the control unit 290 can display in the first expansion area 970 sports articles corresponding to the sports tab 971 that is not displayed on the website screen 910 before the expansion.

That is, the control unit 290 can enlarge the website screen 910 by a corresponding area as the display unit 250 expands by the first expansion area 970 and may control the display unit 250 to display a sports article providing window 973 including sports articles in the first expansion area 970.

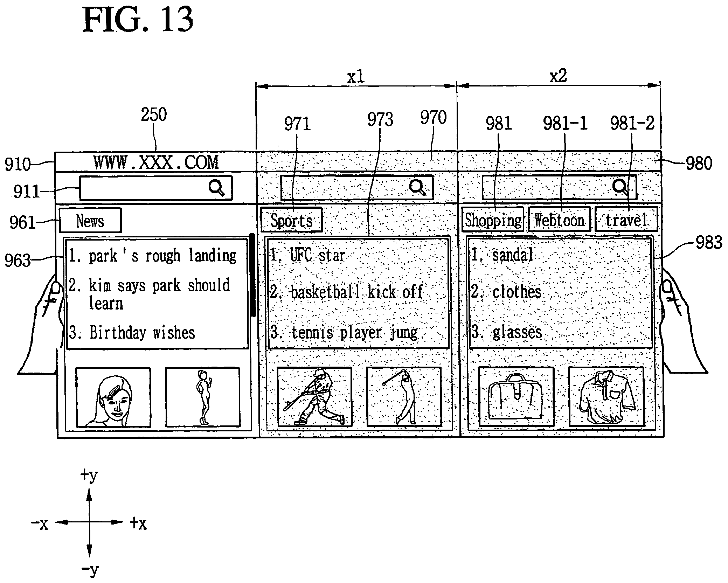

When expansion of the display unit 250 in the +x axis direction is detected when the display unit 250 expands by the first expansion distance x1, the control unit 290, as shown in Fig. 13, may additionally expand the display unit 250 by a second expansion distance x2 in the +x axis direction. That is, the control unit 290 can expand the display unit 250 by the second expansion area 980 corresponding to the second expansion distance x2. As the display unit 250 expands by the second expansion distance x2, the control unit 290 can display in the second expansion area 980 shopping related articles corresponding to the shopping tab 981 that is not displayed on the website screen 910 of Fig. 12.

That is, the control unit 290 can enlarge the website screen 910 by a corresponding area as the display unit 250 expands additionally by the second expansion area and may control the display unit 250 to display a shopping article providing window 983 including shopping related articles in the second expansion area 980. Other tabs including a web toon tab 981-1 and a travel tab 981-2 are displayed on the second expansion area 980. If the screen of the display unit 250 is extended to a maximum size, the control unit 290 displays the other tabs on the most right side area (second expansion area 980). A user may easily see corresponding tab related articles only with an operation for expanding the display unit 250 without an additional selection.

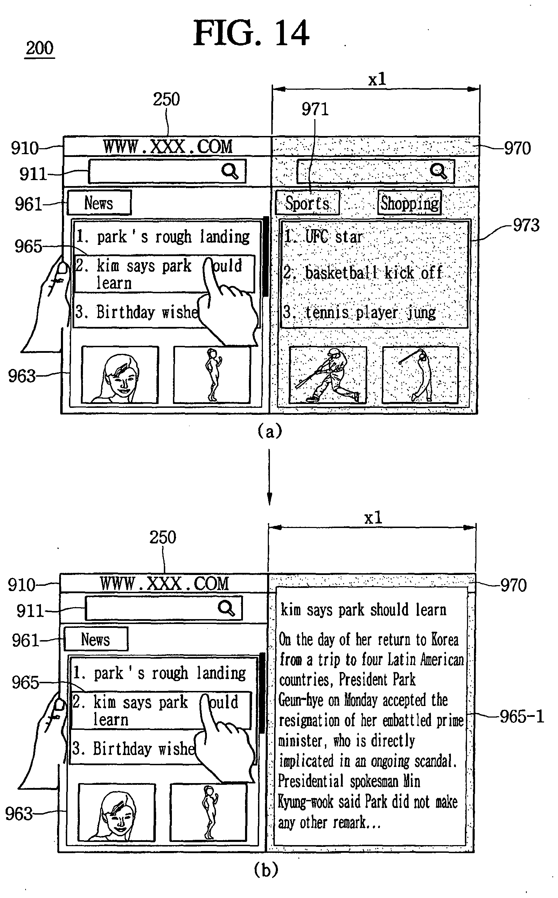

Next, Fig. 14 is described. In particular, Fig. 14 is a view illustrating information provided in an expansion area when a display expands according to another example useful for understanding the present invention.

Fig. 14A is identical to Fig. 12 and its related descriptions are identical. Referring to Fig. 14A, article links respectively corresponding to news related articles may be displayed on the information providing window 965 providing news related articles. When a specific article link 965 is selected, the control unit 290, as shown in Fig. 14B, may control the display unit 250 to display a detailed article content window 965-1 corresponding to the specific article link 965 on the first expansion area 970. The detailed article content window 965-1 may include detailed article information provided through the selected specific article link 965. A user may see detailed article information corresponding to a specific article link through an expanded area as expanding the display unit 250 and seeing a screen before the expansion.

Although it is described with reference to Fig. 14 that the detailed article content window 965-1 Is displayed on the first expansion area 970, the present invention is not limited thereto and it may be displayed in an entire area of the display unit 250 in an expanded state or an area of the display unit 250 before the expansion. Then, a schedule application is executed and when a more viewing option is selected, information provided to an expansion area as a display unit expands is described.

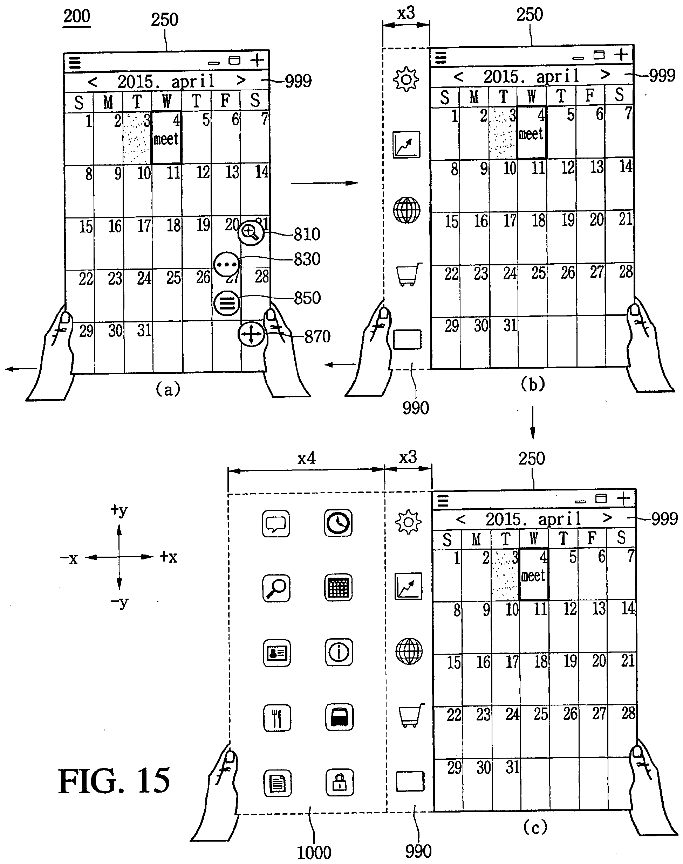

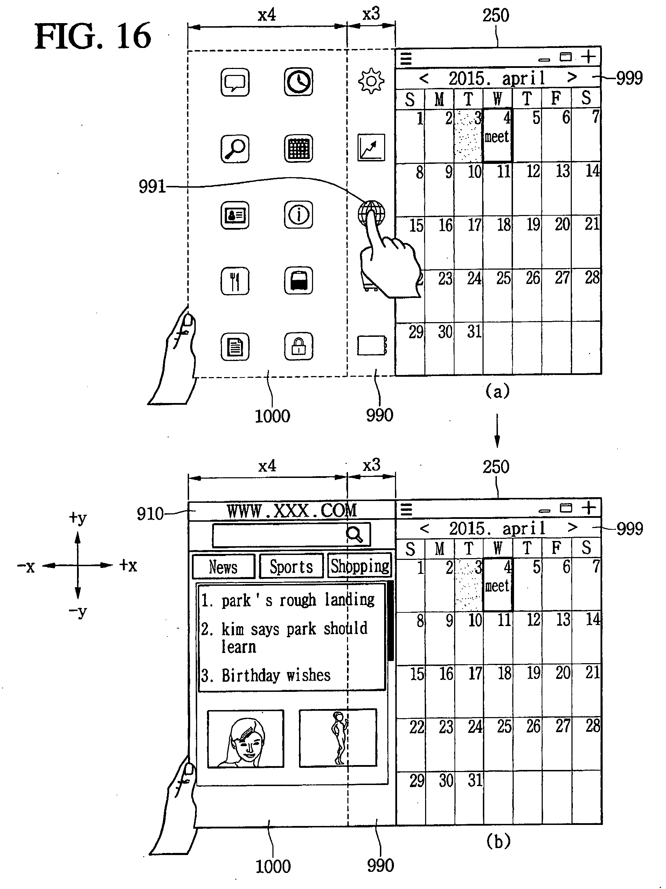

Figs. 15 and 16 are views illustrating information to be provided to an expansion area according to a degree in which a display unit expands when a more viewing option is selected according to another example useful for understanding the present invention.

Referring to Fig. 15A, the display unit 250 displays an execution screen 999 of a schedule application for managing a schedule. According to an example useful for understanding the present invention, the schedule application is described exemplarily but the present invention is not limited thereto. When an option display command is received when the execution screen 1000 of the schedule application is displayed, the control unit 290 can control the display unit 250 to display a plurality of options 810, 830, 850, and 870 on the execution screen 1000 of the schedule application. When the more viewing option 830 is selected and expansion of the display unit.250 is detected in the -x axis direction, the control unit 290, as shown in Fig. 15B, may expand the display unit 250 by a first expansion distance x3 in the -x axis direction.

The first expansion distance x3 may be a reference expansion distance. The display unit 250 may expand by a first expansion area 990 corresponding to the first expansion distance x3. According to an example useful for understanding the present invention, the control unit 1 may be displayed on an application execution screen that is a screen displayed as a specific application installed at the flexible display device 200 Is executed. As one example, icons respectively corresponding to some applications displayed on a home screen (or a default screen) among a plurality of applications may be displayed in the first expansion area 990.

As another example, icons respectively corresponding to some applications whose number of executions is greater than a predetermined number for a predetermined period among a plurality of applications may be displayed in the first expansion area 990. As another example, icons respectively corresponding to some applications that a user sets as favorites among a plurality of applications may be displayed in the first expansion area 990. As another example, icons respectively corresponding to some applications linkable to the schedule application among a plurality of applications may be displayed in the first expansion area 990. Application linkable to the schedule application may be a mail application, a message application, and so on.

When expansion of the display unit 250 in the -x axis direction is detected when the display unit 250 expands by the first expansion area 990, the control unit 290, as shown in Fig. 15C, may additionally expand the display unit 250 by a second expansion distance x4. The display unit 250 may expand by a second expansion area 1000 corresponding to the second expansion distance x4. As the display unit 250 expands additionally by the second expansion area 1000, information on all of a plurality of applications installed on the flexible display device 200 may be displayed.

That is, information on the remaining applications installed to the flexible display device 200 other than the applications displayed on the first expansion area 990 may be displayed on the second expansion area 1000. As another example, information on applications displayed on the home screen of the flexible display device 200 may be displayed on the first expansion area 990 and the second expansion area 1000.

Next, Fig. 16 Is described. Fig. 16A is identical to Fig. 15C. When one application 991 is selected from a plurality of applications displayed on the first expansion area 990 and the second expansion area 1000, the control unit 290 can control the display unit 250 to display the execution screen of the selected application 991 on the first expansion area 990 and the second expansion area 1000. For example, when the internet application 991 is selected, the control unit 290 can control the display unit 250 to display the website screen 910 that is the execution screen of the internet application 991 on the first expansion area 990 and the second expansion area 1000.

A user may perform multitasking through an application execution screen before the display unit 250 expands and an application execution screen after the display unit expands.

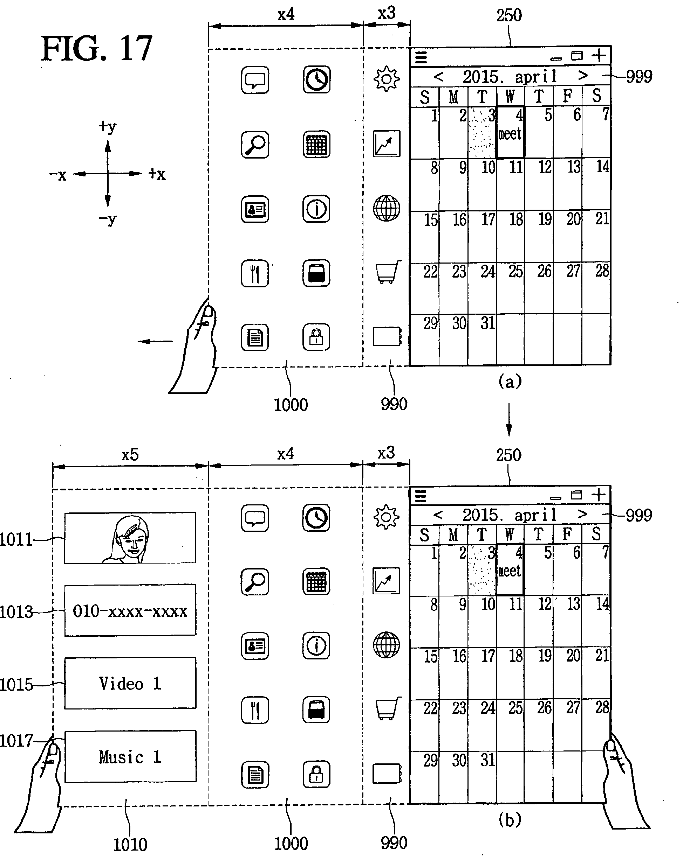

Next, Fig. 17 is described. Fig. 17A is identical to Fig. 15C. When expansion of the display unit 250 in the +x axis direction is detected when the display unit 250 is expanded by the first expansion area 990 and the second expansion area 1000, the control unit 290 can expand the display unit 250 by a third expansion distance x5. The control unit 290 can expand the display unit 250 by the third expansion area 1010 corresponding to the third expansion distance x5. According to an example useful for understanding the present invention, when all information on applications installed to the flexible display device 200 is displayed in the first expansion area 990 and the second expansion area 1000 and thus there is no more information on applications to be displayed, the control unit 290 can control the display unit 250 to display personalization information in the third expansion area 1010.

As one example, content that a user registers as favorites may be displayed in the third expansion area 1010. As another example, pictures that a user views most among pictures stored in the storage unit 270 may be displayed in the third expansion area 1010. In more detail, pictures 1011 that a user views most, a contact 1013 that a user adds as a favorite, a video that a user adds as a favorite, and an audio that a user adds as a favorite may be displayed in the third expansion area 1010. Besides that, various personalization information may be displayed in the third expansion area 1010, for example, displaying a dialog window according to the execution of a message application.

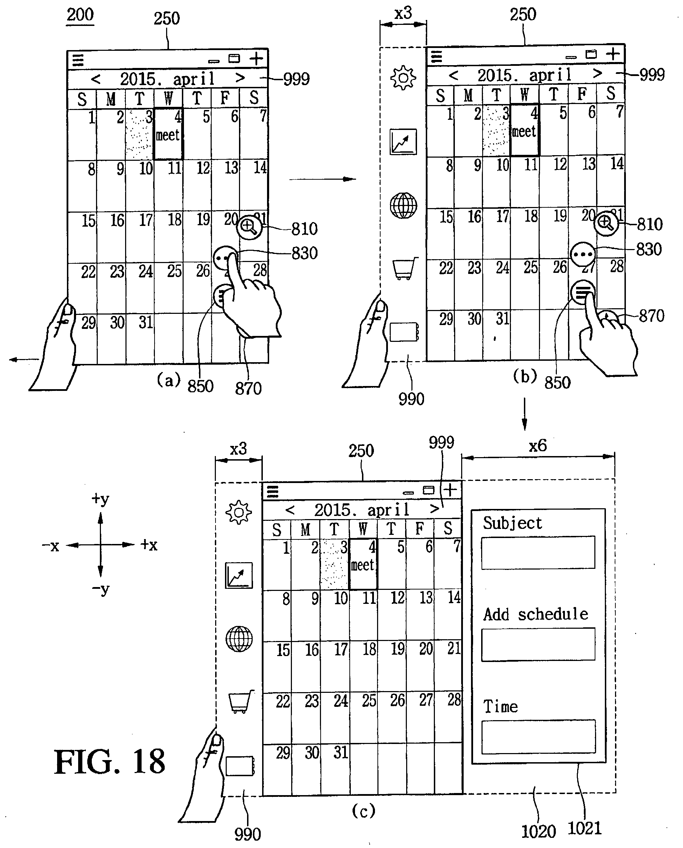

Next, Fig. 18 is described. Fig. 18A is identical to Fig. 15A and Fig. 18B is identical to Fig. 15B. Referring to Fig. 18B, when expanding by the first expansion distance x3 in the -x axis direction, the display unit 250 may receive an option display command. The control unit 290 can control the display unit 250 to display a plurality of options 810, 831, 850, and 870 according to an option display command.

Although the more viewing option 830 is selected in Fig. 18A, the menu setting option 850 may be selected in Fig. 18B. When the menu setting option 850 is selected and expansion of the display unit 250 is additionally detected in the +x axis direction, the control unit 290 can expand the display unit 250 by a second expansion distance x6 in the +x axis direction. The display unit 250 may expand by the second expansion area 1020 corresponding to the second expansion distance x6. The control unit 290 can control the display unit 250 to display information corresponding to the selected menu setting option 850 in the second expansion area 1020. In more detail, the control unit 290 can control the display unit 250 to display a menu window 1021 including sub menus for a setting of a schedule application in the second expansion area 1020.

Accordingly, as a user selects an option and expands the display unit 250, various task environments may be performed. Then, the menu setting option 850 is selected from a plurality of options, information provided as the display unit 250 expands is described.

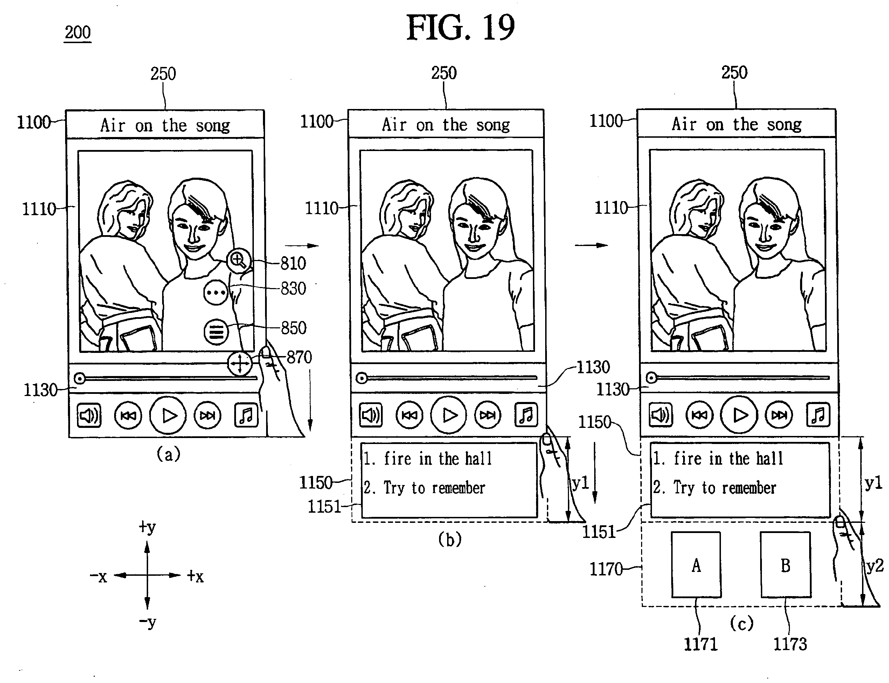

Fig. 19 is a view illustrating information provided as a display unit expands when a menu setting option is selected according to an example useful for understanding the present invention. Referring to Fig. 19A, the display unit 250 is in a state before expansion and an audio playback screen 1110 according to an execution of an audio playback application is displayed. The audio playback screen 1110 may include an audio information providing window 1110 for providing the title, album, thumbnail, and image of music in playback and an audio playback control window 1130 for controlling the playback of an audio file. When an option display command is received when the audio information providing window 1110 is displayed, the control unit 290 can control the display unit 250 to display a plurality of options 810, 830, 850, and 870 on the website screen 910.

If the menu setting options 850 is selected and expansion of the display unit 250 is detected in the -y axis direction, the control unit 290, as shown in Fig. 19B, may expand the display unit 250 by the first expansion distance y1. The control unit 290 can expand the display unit 250 by the first expansion area 1150 corresponding to the first expansion distance y1. Herein, the first expansion distance y1 may be the reference expansion distance described in operation S315. The control unit 290 can control the display unit 250 to display an audio list 1151 including at least one audio file in the first expansion area 1150.

When expansion of the display unit 250 is additionally detected in the -y axis direction when the display unit 250 expands by the first expansion distance y1, the control unit 290, as shown in Fig. 19C, may additionally expand the display unit 250 by the second expansion distance y2. The control unit 290 can expand the display unit 250 by the second expansion area 1170 corresponding to the second expansion distance y2. At least one audio folder 1171 and 1173 for providing an audio list may be displayed, in the second expansion area 1170. When a specific audio folder is selected, the control unit 290 can control the display unit 250 to display an audio list included in the selected audio folder in the second expansion area 1170.

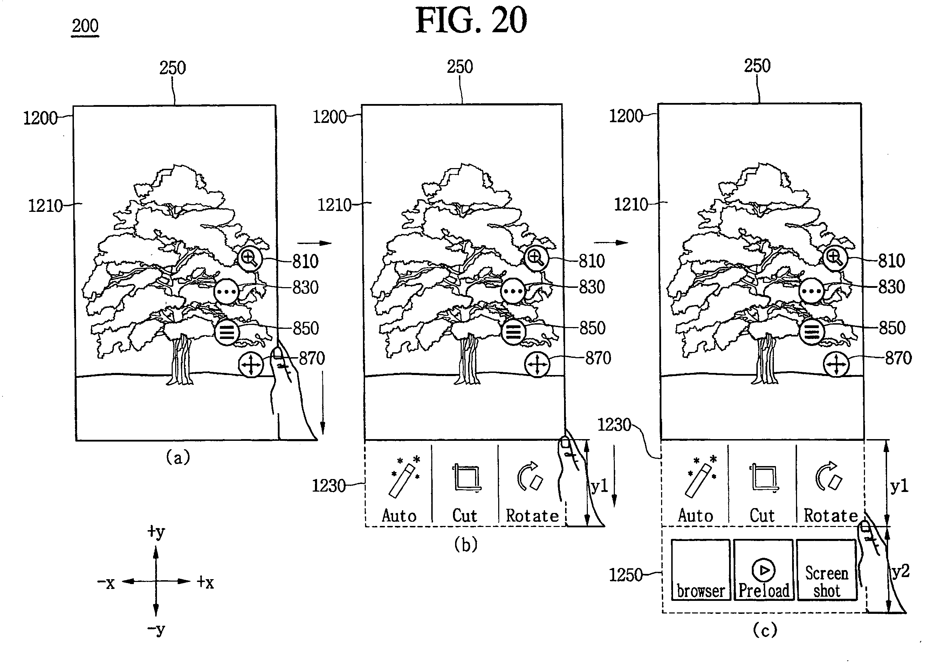

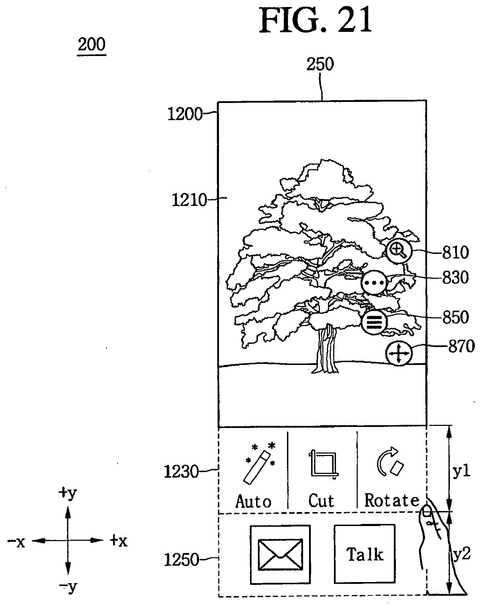

Next, Figs. 20 to 21 are described. Referring to Fig. 20A, the display unit 250 is in a state before expansion and displays a gallery screen 1210 according to a gallery application for providing an image. One picture 1210 selected from a plurality of pictures according a user input may be displayed in the gallery screen 1200. When an option display command is received when the gallery screen 1200 is displayed, the control unit 290 can control the display unit 250 to display a plurality of options 810, 830, 850, and 870 on the website screen 1200.

If the menu setting options 850 is selected and expansion of the display unit 250 is detected in the -y axis direction, the control unit 290, as shown in Fig. 20B, may expand the display unit 250 by the first expansion distance y1. The control unit 290 can expand the display unit 250 by the first expansion area 1230 corresponding to the first expansion distance y1. Herein, the first expansion distance y1 may be the reference expansion distance described in operation S315. The control unit 290 can control the display unit 250 to display style correction options for correcting the style of a picture 1210 in the first expansion area 1230.

When expansion of the display unit 250 is additionally detected in the -y axis direction when the display unit 250 is expanded by the first expansion distance y1, the control unit 290, as shown in Fig. 20C, may additionally expand the display unit 250 by the second expansion distance y2. The control unit 290 can expand the display unit 250 by the second expansion area 1250 corresponding to the second expansion distance y2. According to an example useful for understanding the present invention, a corrected picture where a style correction of the picture 1210 is performed may be displayed in the second expansion area 1250.

According to another example useful for understanding the present invention, pictures different from the displayed picture 1210 may be displayed in the second expansion area 1250: According to another example useful for understanding the present invention, information on sharing applications for sharing a corrected picture where correction is applied to the style of the picture 1210 may be displayed in the second expansion area 1250. A user expands the display unit 250 to apply correction to the style of the picture 1210 and easily shares the corrected picture with the other parties through a sharing application.

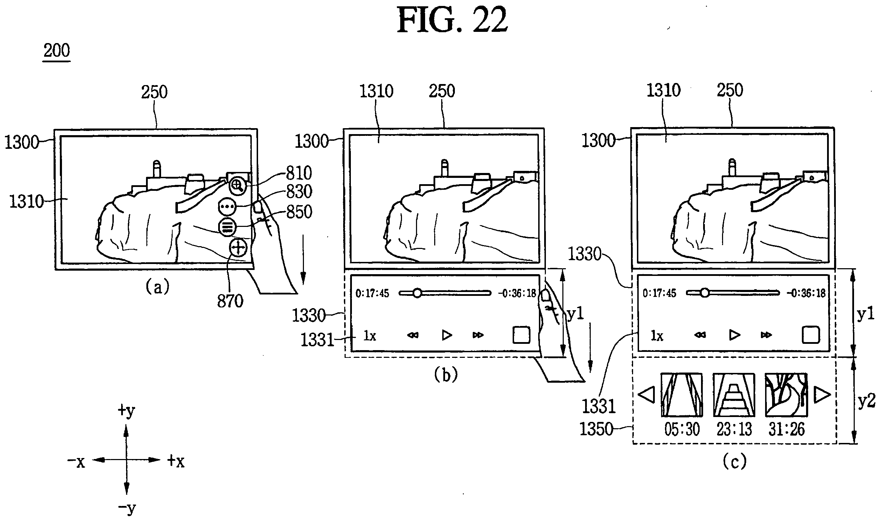

Next, Fig. 22 is described. Referring to Fig. 22A, the display unit 250 is in a state before expansion and displays a video playback screen 1300 according to the execution of a video playback application for video playback.

A video in playback may be displayed on the video playback screen 1300. When an option display command is received when the video playback screen 1300 is displayed, the control unit 290 can control the display unit 250 to display a plurality of options 810, 830, 850, and 870 on the video playback screen 1300.

If the menu setting options 850 is selected and expansion of the display unit 250 is detected in the -y axis direction, the control unit 290, as shown in Fig. 22B, may expand the display unit 250 by the first expansion distance y1. The control unit 290 can expand the display unit 250 by the first expansion area 1330 corresponding to the first expansion distance y1. Herein, the first expansion distance y1 may be the reference expansion distance described in operation S315. The control unit 290 can control the display unit 250 to display a video playback control window 1331 for controlling the playback of the video 1310 in the first expansion area 1330. The video playback control window 1331 may include a progress bar indicating the playback progress of a video and stop, fast forward, rewind, and play buttons.

When expansion of the display unit 250 is additionally detected in the -y axis direction when the display unit 250 expands by the first expansion distance y1, the control unit 290, as shown in Fig.22C, may additionally expand the display unit 250 by the second expansion distance y2. Thumbnail images respectively corresponding to specific playback timings in the entire playback section of the video 1310 may be displayed in the second expansion area 1350 corresponding to the second expansion distance y2. Additionally, a playback time corresponding to each of the thumbnail images may be further displayed in the second expansion area 1350. A user may easily select a video playback timing through the playback control window 1331 and the thumbnail images provided as the display unit 250 expands.

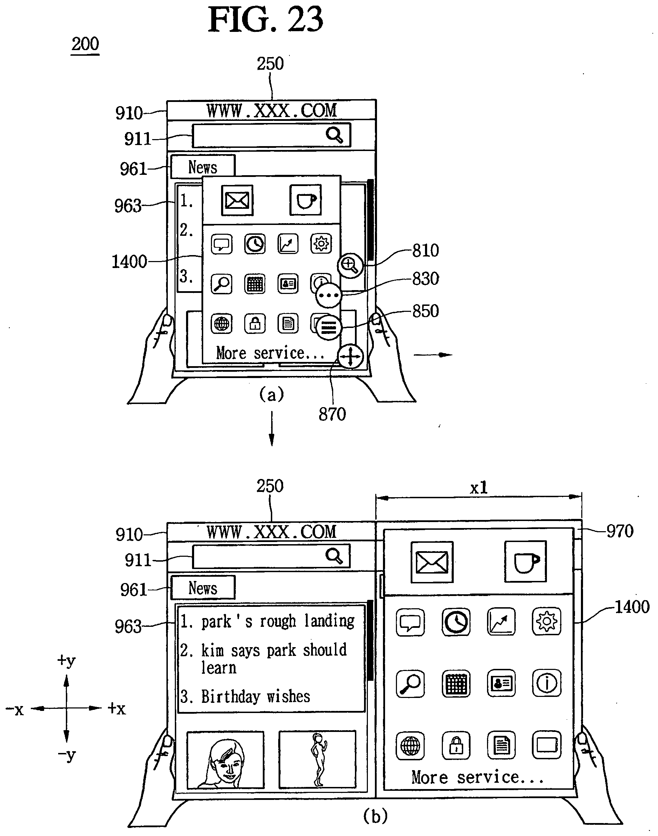

Then, Figs. 23 to 27 are described. Figs. 23 to 25 are views illustrating a function performed as a display unit expands when a move option is selected according to an embodiment of the present invention.

Referring to Fig. 23A, the display unit 250 is in a state before expansion and displays a website screen 910. A service screen 1400 displaying a service provided from a website may overlap the website screen 910 and may be displayed. Information on some applications among all applications provided from a corresponding website may be displayed on the service screen 1400. A user may check whether there is additional information through the sentence <More service>. When an option display command is received, the control unit 290 can control the display unit 250 to display a plurality of options 810, 831, 850, and 870 on the website screen 910.

When the move option 870 is selected and expansion of the display unit 250 is detected in the +x axis direction, the control unit 290, as shown in Fig. 23B, may expand the display unit 250 by the first expansion distance x1 in the +x axis direction. The display unit 250 may expand by a first expansion area 970 corresponding to the first expansion distance x1. The control unit 290 can control the display unit 250 to move the service screen 1400 overlapped on the website screen 910 to the first expansion area 970. As the service screen 1400 overlapped on the website screen 910 is moved to the first expansion area 970 and displayed, a user may utilize a service provided from the service screen 1400 without being interrupted from viewing the website screen 910.

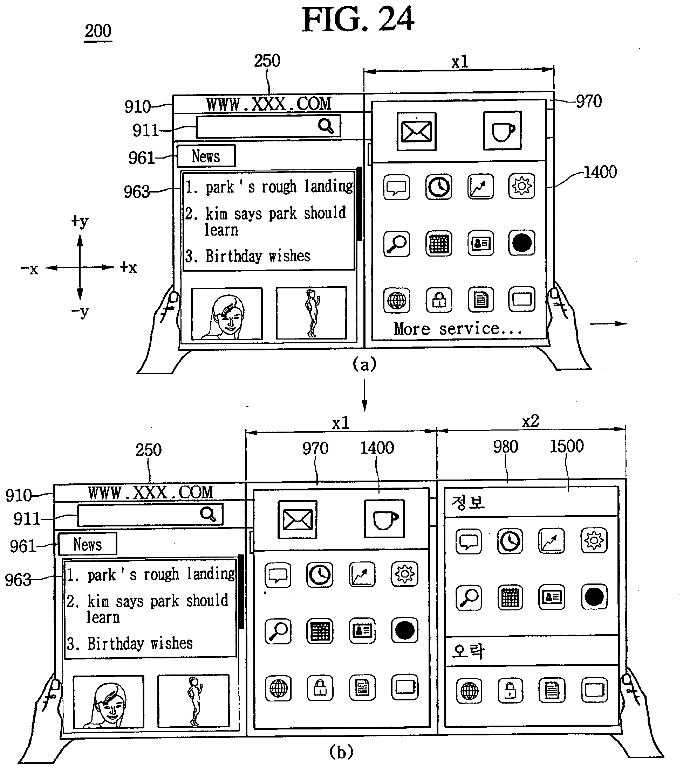

Next, Fig. 24 is described. Fig. 24A is identical to Fig. 23B. When expansion of the display unit 250 is additionally detected in the +x axis direction when the display unit 250 is expanded by the first expansion area 970, the control unit 290 can additionally expand the display unit 250 by the second expansion distance x2. The display unit 250 may expand by the second expansion area 980 corresponding to the second expansion distance x2. The control unit 290 can additionally display information on applications not displayed in the first expansion area 970, in the second expansion area 980. That is, an additional service screen 1500 including information on applications not displayed on the service screen 1400 may be displayed in the second expansion area 980. A user may easily check additional information not displayed before with an operation for expanding a display unit.

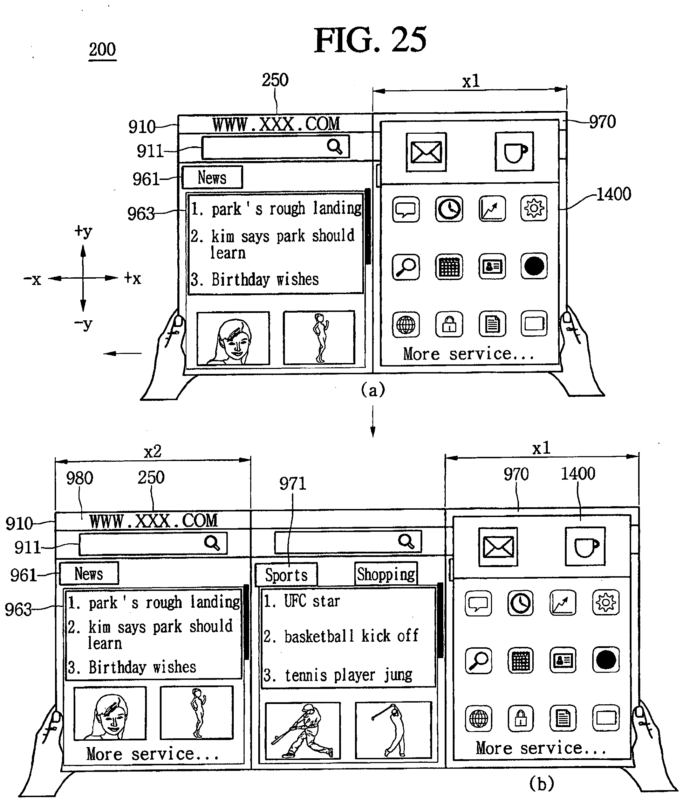

Next, Fig. 25 is described. Fig. 25A is identical to Fig. 23B. When expansion of the display unit 250 is additionally detected in the -x axis direction when the display unit 250 is expanded by the first expansion area 970, the control unit 290, as shown in Fig. 25B, may expand the display unit 250 by the second expansion distance x2 in the -x axis direction. The display unit 250 may expand by the second expansion area 980 corresponding to the second expansion distance x2. As one example, the control unit 290 can display the information providing window 963 corresponding to the news tab 961 in the second expansion area 980 and may display sports articles corresponding to the sports 971 on a reference screen that is a screen before the display unit 250 expands. As another example, the control unit 290 can display the information providing window 963 corresponding to the news tab 961 in the second expansion area 980 and may display additional news related articles not displayed on the information providing window 963, on a reference screen that is a screen before the display unit 250 expands.

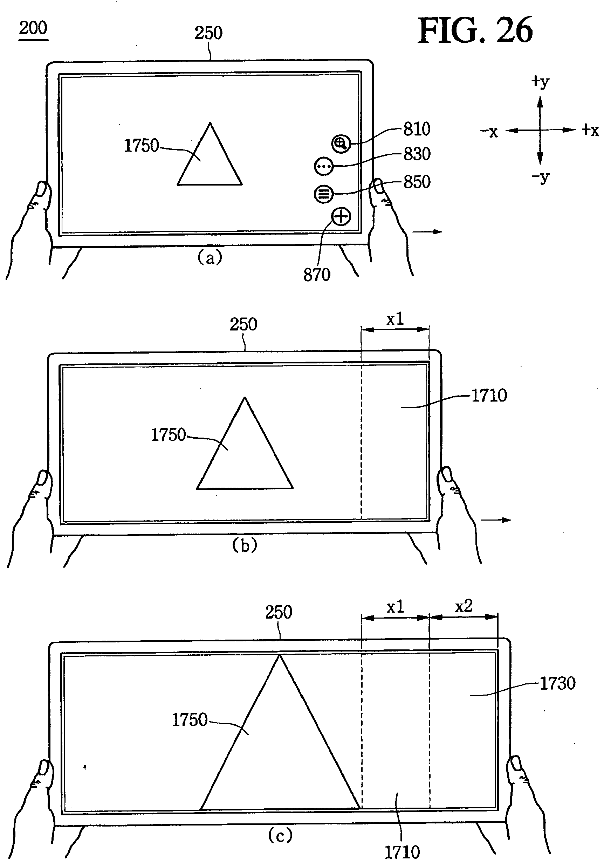

Next, Fig. 26 is described. Fig. 26 is a view illustrating a function performed as a display unit expands when a size adjustment option is selected according to an example useful for understanding the present invention.

Referring to Fig. 26A, the display unit 250 Is in a state before expansion and displays an item 1750. When the size adjustment option 810 is selected in this state and expansion of the display unit 250 Is detected in the +x axis direction, the control unit 290, as shown in Fig. 26B, may expand the display unit 250 by the first expansion distance x1 in the +x axis direction. The display unit 250 may expand by the first expansion area 1710 corresponding to the first expansion distance x1. As the display unit 250 expands by the first expansion area 1710, the control unit 290 can perform a control to enlarge and display the size of the item 1750. The size of the item 1750 may be enlarged in correspondence to a ratio of the expanded area.

When expansion of the display unit 250 is additionally detected in the +x axis direction, the control unit 290 can additionally expand the display unit 250 by the second expansion distance x2 in the +x axis direction. Accordingly, the display unit 250 may expand by the second expansion area 1730 corresponding to the second expansion distance x2. As the display unit 250 expands additionally by the second expansion area 1730, the control unit 290 can additionally enlarge and display the size of the item 1750.

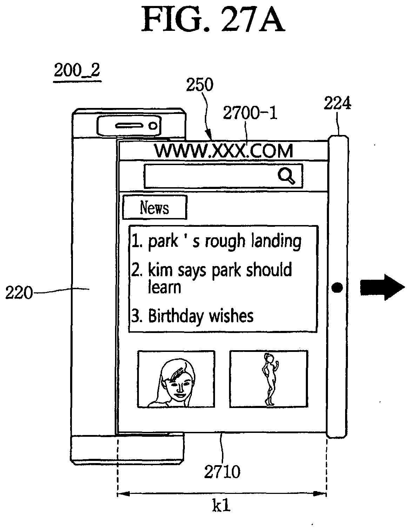

In the following, each of expansion areas can be controlled as a separate screen. Figs. 27A to 27C are views illustrating information provided from each expansion area according to expanding the screen of the display unit.

Under Figs. 27A to 27C, the flexible display device 200 will be described on the assumption that the rollable display device 200-2(see fig. 3A-F). But the flexible display device 200 may be also the stretchable display device 200-1.

Referring to FIG. 27A, the screen of the display unit 250 of the rollable display device 200-2 is expanded by an expansion area 2710 corresponding to an expansion distance k1. Web site window 2700-1 is displayed on the expansion area 2710. Entire information can be provided from the web site window 2700-1 does not displayed on the expansion area 2710. Namely, partial information of the entire information is displayed on the expansion area 2710, other information of entire information is not displayed on the expansion area 2710.

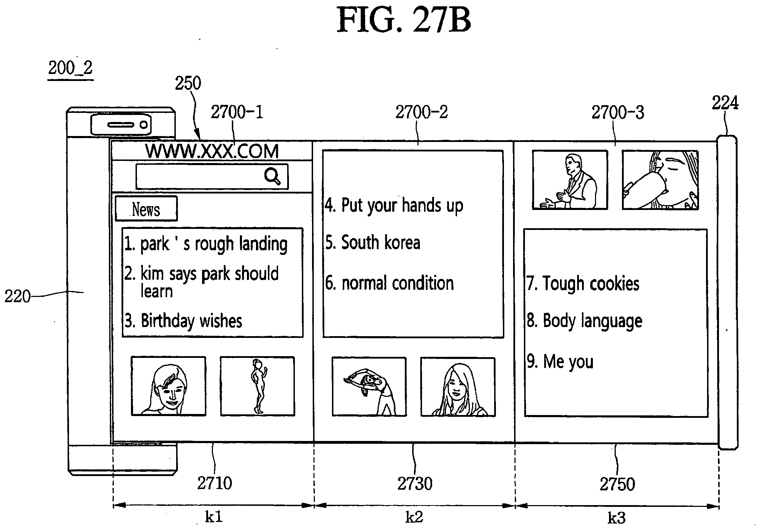

If the screen of the display unit 250 is additionally expanded by an expansion area 2730 corresponding to an expansion distance k2 as shown FIG. 27B, the control unit 290 can display a web site window 2700-2 including partial information of the entire information on the expansion area 2730. Also, if the screen of the display unit 250 is additionally expanded by an expansion area 2750 corresponding to an expansion distance k3 as shown FIG. 27B, the control unit 290 can display a web site window 2700-3 including remaining information of the entire information on the expansion area 2750. Each of the web site windows 2700-1, 2700-2, 2700-3 can have the same access address(or URL, Uniform Resource Locator).

The user can view the entire information can be provided from the web site window 2700-1 through the expansion areas(2730, 2750) without adjusting a scroll bar. Each of the expansion distances (k2, k3) can be greater than the reference expansion distance described in operation S313.

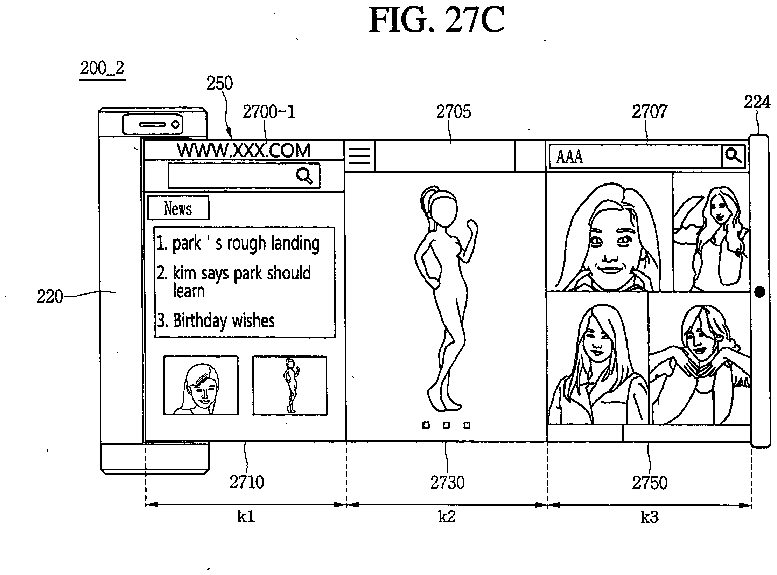

Further, if the screen of the display unit 250 is additionally expanded by an expansion area 2730 corresponding to an expansion distance k2 as shown FIG. 27C, the control unit 290 can display a web site window 2705 on the expansion area 2730. The web site window 2705 is a window activated(but, not displayed) while displaying the web site window 2700-1 the under FIG. 27A. An access address corresponding to the web site window 2700-1 is different from an access address corresponding to the web site window 2705.

Also, if the screen of the display unit 250 is additionally expanded by an expansion area 2750 corresponding to an expansion distance k3 as shown FIG. 27C, the control unit 290 can display a web site window 2707 on the expansion area 2750. The web site window 2707 is a window activated (but, not displayed) while displaying the web site window 2700-1 the under FIG. 27A.

The access address corresponding to the web site window 2700-1 is different from an access address corresponding to the web site window 2707. Also, the access address corresponding to the web site window 2705 is different from the access address corresponding to the web site window 2707.

The user can view the activated web site windows 2705, 2707 through the expansion areas(2730, 2750) without additional input(example, touch input) for displaying the web site windows 2705. Each of the expansion distances (k2, k3) can be greater than the reference expansion distance described in operation S313. In one example of Figs. 27B to 27C can be performed after the more viewing option 830 is selected.

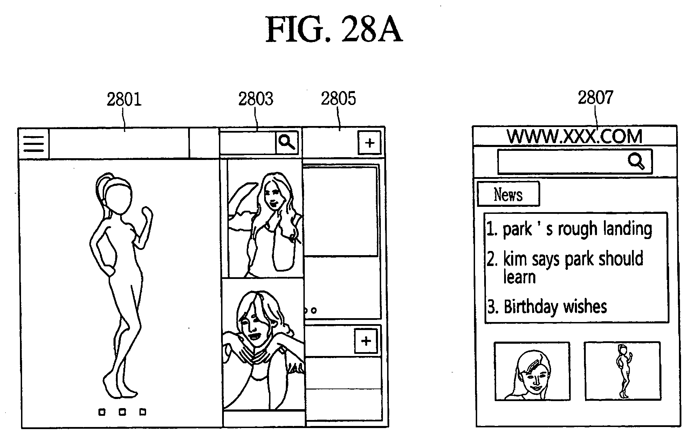

Figs. 28A to 28D are views has been accessed web site windows displayed on each expansion area according to expanding the screen of the display unit. Referring to fig. 28A, a plurality of has been accessed web site windows 2801, 2803, 2805 are shown. a plurality of accessed web site windows 2801, 2803, 2805 are arranged in an order that has been access recently. Also, a main web site window 2807 is shown. The main web site window can be a home web site window.

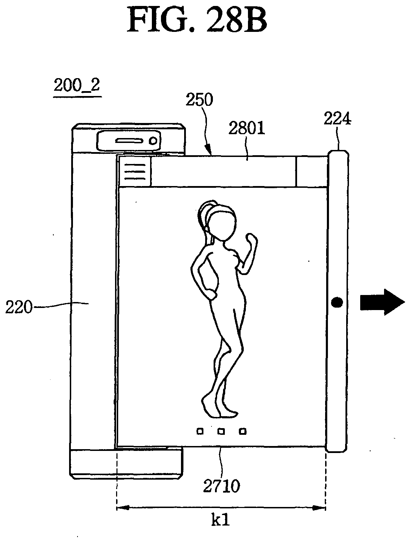

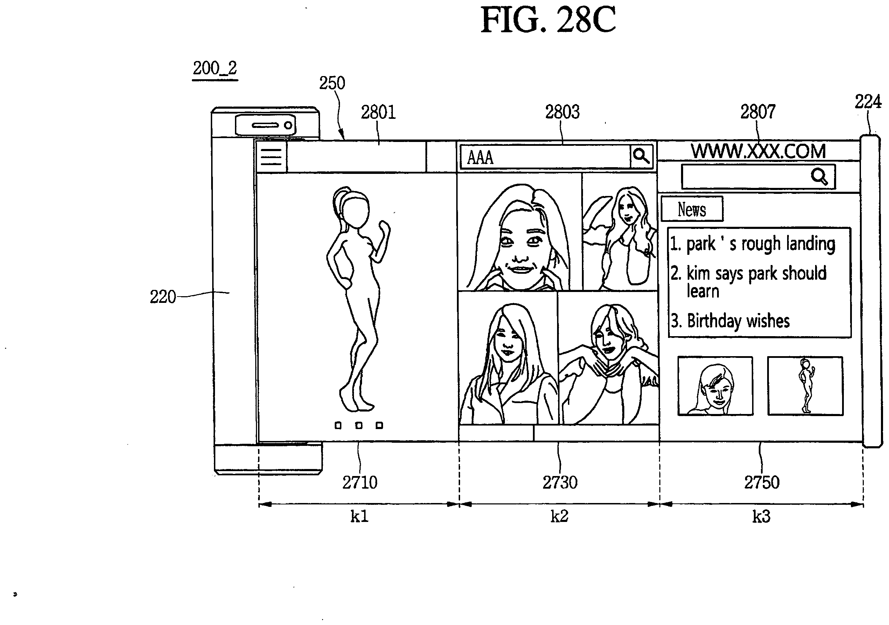

Referring Fig. 28B, the rollable display unit displays currently accessing web site window 2801 on the screen of the display unit 250. If the screen of the display unit 250 is expanded by an expansion area 2730 corresponding to an expansion distance k2, as shown fig. 28C, the control unit 290 can display the web site window 2803 accessed prior to the web site window 2801 on the expansion area 2730. If the screen of the display unit 250 is additionally expanded by an expansion area 2750 corresponding to an expansion distance k3, the control unit 290 can display the main web site window 2807 on the expansion area 2750. the main web site window 2807 can be displayed at the most right side. The user can use the main web site window 2807 directly. Each of the expansion distances (k2, k3) can be greater than the reference expansion distance described in operation S313.

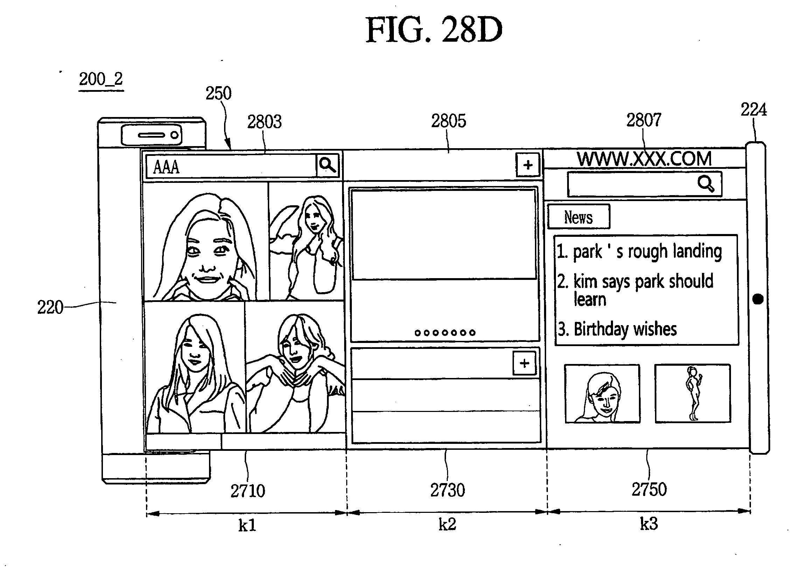

If an back command is received, as shown fig. 28D, the control unit 290 can change the web site window 2801 to the web site window 2803 on the expansion area 2710 and change the web site window 2803 to the web site window 2805 accessed prior to the web site window 2803 on the expansion area 2730.

The control unit 290 can continue to display the main web site window 2807 regardless of receiving the back command. In one example of Figs. 28C to 27D can be carry out after the more viewing option 830 is selected. The user can easily view a history which recently has been accessed web site window through the expansion areas. A user may easily enlarge and view desired information only with an operation of expanding a display unit.

According to various examples useful for understanding the present invention, since a variety of information is provided according to an expansion degree in the screen size of a display unit, a user's demand may be satisfied.

The invention can also be embodied as computer readable codes on a computer readable recording medium. The computer readable recording medium is any data storage device that can store data which can be thereafter read by a computer system. Examples of the computer readable recording medium include magnetic storage media (e.g., ROM, floppy disks, hard disks, etc.) and optical recording media (e.g., CD-ROMs, or DVDs) and carrier waves (e.g., transmission through the Internet). Additionally, the computer may include the control unit 180 of a terminal.

## Claims

1. A flexible display device (200), comprising:
a display (250) including an expandable screen;
a sensor (210) configured to detect a size of the screen; and
a controller (290) configured to:
display first information on the screen in a non-expanded state,
display second information in a first expanded display area of the display according to expanding the screen,
wherein the second information is information related to the first information,
wherein the first information is information on an executing application,
wherein the controller (290) is further configured to:
display a plurality of options on the screen for performing functions linked to the executing application, in response to an input options display command,
receive a selection of a first option among the plurality of options for performing a first function linked to the executing application,
display the second information in the first expanded display area of the display according to the first function in response to the screen being expanded to include the first expanded display area, and
display third information in a second expanded display area of the display according to the first function in response to the screen being expanded further to include the second expanded display area,
**characterized in that**,
the first option is a move option and the first function is a move function,
wherein the first information consists of a website screen (910) from a website, and the second information consists of a service screen (1400) displaying information on at least one application provided by the website,
wherein the service screen is overlapped on the website screen in the non-expanded state, and
wherein the controller is further configured to move the service screen to the first expanded display area in response to the screen being expanded further to include the second expanded area if the current selected first option is the move option.

2. The flexible display device according to claim 1, wherein the controller is further configured to:
display the second information to include a same type or a different type of information as the first information in the first expanded display area.

3. The flexible display device according to claim 1, wherein the controller is further configured to:
display the third information to include a different type of information from the first information in the second expanded display area.

4. The flexible display device according to claim 1, wherein the second information includes remaining information of the first information that has not been displayed on the screen before expansion of the display to include the first expanded display area.

5. The flexible display device according to claim 2, wherein the first information is information on executing application,
wherein the second information includes information on applications linkable to the executing application.

6. The flexible display device according to claim 3, wherein the third information includes applications other than the applications linkable to the executing application.

7. The flexible display device according to claim 1, wherein the executing application is an internet application and the first information includes a webpage,
wherein the second information includes a keyboard window for inputting information, and
wherein the third information includes additional input buttons that have not been displayed on the keyboard window before expansion of the display to include the second expanded display area.

8. The flexible display device according to claim 1, wherein the controller is further configured to:
display a scroll bar on the display unit representing whether there is additional information that cannot be displayed on the first information, and
move the scroll bar according to expanding the screen of the display unit.

9. The flexible display device according to claim 8, wherein the controller is further configured not to expand the first information when the screen is expanded in response to the scroll bar representing there is additional information that cannot be displayed on the first information.

10. The flexible display device according to claim 1, wherein the plurality of options on the screen for performing functions linked to the executing application further include any one of a size adjustment option, a more viewing option and a menu setting option.

11. The flexible display device according to claim 10, wherein the controller is further configured to display the second information on the first expanded display area according to a request for selecting the more viewing option.

12. The flexible display device according to claim 10, wherein the controller is further configured to display the second information including sub menus related to the first information on the first expanded display area according to a request for selecting the menu setting option.

## Patentansprüche

1. Flexible Anzeigevorrichtung (200), mit:
einer Anzeige (250), die einen expandierbaren Bildschirm aufweist,
einem Sensor (210), der dazu konfiguriert ist, eine Größe des Bildschirms zu erfassen, und
einer Steuereinheit (290), die konfiguriert ist zum:
Anzeigen erster Information auf dem Bildschirm in einem nicht expandierten Zustand,
Anzeigen zweiter Information in einem ersten expandierten Anzeigebereich der Anzeige entsprechend dem Expandieren des Bildschirms,
wobei die zweite Information mit der ersten Information in Beziehung stehende Information ist,
wobei die erste Information Information über eine in Ausführung befindliche Anwendung ist,
wobei die Steuereinheit (290) ferner konfiguriert ist zum:
Anzeigen, in Reaktion auf einen Eingabeoptionenanzeigebefehl, mehrerer Optionen auf dem Bildschirm zum Ausführen von mit der in Ausführung befindlichen Anwendung verbundenen Funktionen,
Empfangen einer Auswahl einer ersten Option aus den mehreren Optionen zum Ausführen einer mit der in Ausführung befindlichen Anwendung verbundenen, ersten Funktion,
Anzeigen der zweiten Information in dem ersten expandierten Anzeigebereich der Anzeige entsprechend der ersten Funktion in Reaktion darauf, dass der Bildschirm zum Enthalten des ersten expandierten Anzeigebereichs expandiert wird, und
Anzeigen dritter Information in einem zweiten expandierten Anzeigebereich der Anzeige entsprechend der ersten Funktion in Reaktion darauf, dass der Bildschirm weiter expandiert wird, um den zweiten expandierten Anzeigebereich zu enthalten,
**dadurch gekennzeichnet, dass**
die erste Option eine Verschiebeoption ist und die erste Funktion eine Verschiebefunktion ist,
wobei die erste Information aus einer Websitebildschirmdarstellung (910) einer Website besteht und die Information aus einer Servicebildschirmdarstellung (1400) besteht, die Information über zumindest eine von der Website bereitgestellte Anwendung anzeigt,
wobei die Servicebildschirmdarstellung in dem nicht expandierten Zustand auf der Websitebildschirmdarstellung überlappt, und
wobei die Steuereinheit ferner dazu konfiguriert ist, die Servicebildschirmdarstellung in Reaktion darauf, dass der Bildschirm weiter expandiert wird, um den zweiten expandierten Bereich zu enthalten, in den ersten expandierten Anzeigebereich zu verschieben, falls die derzeit ausgewählte erste Option die Verschiebeoption ist.

2. Flexible Anzeigevorrichtung nach Anspruch 1, wobei die Steuereinheit ferner konfiguriert ist zum:
Anzeigen der zweiten Information zum Enthalten einer selben Art oder einer unterschiedlichen Art von Information als die erste Information in dem ersten expandierten Anzeigebereich.

3. Flexible Anzeigevorrichtung nach Anspruch 1, wobei die Steuereinheit ferner konfiguriert ist zum:
Anzeigen der dritten Information zum Enthalten einer von der ersten Information verschiedenen Art von Information in dem zweiten expandierten Anzeigebereich.

4. Flexible Anzeigevorrichtung nach Anspruch 1, wobei die zweite Information verbleibende Information der ersten Information enthält, die auf dem Bildschirm vor einer Expansion der Anzeige zum Enthalten des ersten expandierten Anzeigebereichs nicht angezeigt worden ist.

5. Flexible Anzeigevorrichtung nach Anspruch 2, wobei die erste Information Information über eine in Ausführung befindliche Anwendung ist,
wobei die zweite Information Information über Anwendungen enthält, die mit der in Ausführung befindlichen Anwendung verbindbar sind.

6. Flexible Anzeigevorrichtung nach Anspruch 3, wobei die dritte Information andere als die mit der in Ausführung befindlichen Anwendung verbindbaren Anwendungen enthält.

7. Flexible Anzeigevorrichtung nach Anspruch 1, wobei die in Ausführung befindliche Anwendung eine Internetanwendung ist und die erste Information eine Webseite enthält,
wobei die zweite Information ein Tastaturfenster zum Eingeben von Information enthält, und
wobei die dritte Information zusätzliche Eingabetasten enthält, die vor einer Expansion der Anzeige zum Enthalten des zweiten expandierten Anzeigebereichs nicht auf dem Tastaturfenster angezeigt worden sind.

8. Flexible Anzeigevorrichtung nach Anspruch 1, wobei die Steuereinheit ferner konfiguriert ist zum:
Anzeigen eines Rollbalkens auf der Anzeigeeinheit, welcher darstellt, ob zusätzliche Information vorhanden ist, die auf der ersten Information nicht angezeigt werden kann, und
Bewegen des Rollbalkens entsprechend einem Expandieren des Bildschirms der Anzeigeeinheit.

9. Flexible Anzeigevorrichtung nach Anspruch 8, wobei die Steuereinheit ferner dazu konfiguriert ist, in Reaktion darauf, dass der Rollbalken darstellt, dass zusätzliche Information vorhanden ist, die nicht auf der ersten Information angezeigt werden kann, die erste Information nicht zu expandieren, wenn der Bildschirm expandiert wird.

10. Flexible Anzeigevorrichtung nach Anspruch 1, wobei die mehreren Optionen auf dem Bildschirm zum Ausführen von mit der in Ausführung befindlichen Anwendung verbundenen Funktionen ferner jede beliebige einer Größeneinstelloption, einer Mehr-Anzeigen-Option und einer Menüeinstelloption umfassen.

11. Flexible Anzeigevorrichtung nach Anspruch 10, bei der die Steuereinheit ferner dazu konfiguriert ist, entsprechend einer Anforderung zum Auswählen der Mehr-Anzeigen-Option die zweite Information auf dem ersten expandierten Anzeigebereich anzuzeigen.

12. Flexible Anzeigevorrichtung nach Anspruch 10, wobei die Steuereinheit ferner dazu konfiguriert ist, entsprechend einer Anforderung zum Auswählen der Menüeinstelloption die zweite Information mit die erste Information betreffenden Untermenüs auf dem ersten expandierten Anzeigebereich anzuzeigen.

## Revendications

1. Dispositif d'affichage flexible (200), comprenant :
un dispositif d'affichage (250) comprenant un écran extensible ;
un détecteur (210) conçu pour détecter une taille de l'écran ; et
un dispositif de commande (290) conçu pour :
afficher des premières informations sur l'écran dans un état non étendu,
afficher des deuxièmes informations dans une zone d'affichage étendue du dispositif d'affichage en fonction de l'extension de l'écran,
dans lequel les deuxièmes informations sont des informations liées aux premières informations,
dans lequel les premières informations sont des informations sur une application d'exécution,
dans lequel le dispositif de commande (290) est conçu en outre pour :
afficher une pluralité d'options sur l'écran afin d'exécuter des fonctions liées à l'application d'exécution, en réponse à une commande d'affichage d'options d'entrée,
recevoir une sélection d'une première option parmi la pluralité d'options afin d'exécuter une première fonction liée à l'application d'exécution,
afficher les deuxièmes informations dans la première zone d'affichage étendue du dispositif d'affichage en fonction de la première fonction en réponse à l'écran qui s'étend pour comprendre la première zone d'affichage étendue, et
afficher des troisièmes informations dans une seconde zone d'affichage étendue du dispositif d'affichage en fonction de la première fonction en réponse à l'écran qui s'étend davantage pour comprendre la seconde zone d'affichage étendue,
**caractérisé en ce que**,
la première option est une option de mouvement et la première fonction est une fonction de mouvement,
dans lequel les premières informations se composent d'un écran de site Web (910) à partir d'un site Web, et les deuxièmes informations se composent d'un écran de service (1400) affichant des informations sur au moins une application fournie par le site Web,
dans lequel l'écran de service est chevauché sur l'écran de site Web dans l'état non étendu, et
dans lequel le dispositif de commande est conçu en outre pour déplacer l'écran de service vers la première zone d'affichage étendue en réponse à l'écran qui est étendu davantage pour comprendre la seconde zone étendue si la première option sélectionnée actuelle est l'option de mouvement.

2. Dispositif d'affichage flexible selon la revendication 1, dans lequel le dispositif de commande est conçu en outre pour :
afficher les deuxièmes informations pour comprendre un même type ou un type différent d'informations par rapport aux premières informations dans la première zone d'affichage étendue.

3. Dispositif d'affichage flexible selon la revendication 1, dans lequel le dispositif de commande est conçu en outre pour :
afficher les troisièmes informations pour comprendre un type différent d'informations à partir des premières informations dans la seconde zone d'affichage étendue.

4. Dispositif d'affichage flexible selon la revendication 1, dans lequel les deuxièmes informations comprennent des informations restantes des premières informations qui n'ont pas été affichées sur l'écran avant l'extension de l'écran pour comprendre la première zone d'affichage étendue.

5. Dispositif d'affichage flexible selon la revendication 2, dans lequel les premières informations sont des informations sur l'application d'exécution,
dans lequel les deuxièmes informations comprennent des informations sur des applications pouvant être liées à l'application d'exécution.

6. Dispositif d'affichage flexible selon la revendication 3, dans lequel les troisièmes informations comprennent des applications autres que les applications pouvant être liées à l'application d'exécution.

7. Dispositif d'affichage flexible selon la revendication 1, dans lequel l'application d'exécution est une application Internet et les premières informations comprennent une page Web,
dans lequel les deuxièmes informations comprennent une fenêtre de clavier permettant d'entrer des informations, et
dans lequel les troisièmes informations comprennent des boutons d'entrée supplémentaires qui n'ont pas été affichés sur la fenêtre de clavier avant l'extension du dispositif d'affichage pour comprendre la seconde zone d'affichage étendue.

8. Dispositif d'affichage flexible selon la revendication 1, dans lequel le dispositif de commande est conçu en outre pour :
afficher une barre de défilement sur l'unité d'affichage représentant s'il existe des informations supplémentaires qui ne peuvent pas être affichées sur les premières informations, et
déplacer la barre de défilement en fonction de l'extension de l'écran de l'unité d'affichage.

9. Dispositif d'affichage flexible selon la revendication 8, dans lequel le dispositif de commande est conçu en outre pour ne pas étendre les premières informations lorsque l'écran est étendu en réponse à la barre de défilement représentant qu'il existe des informations supplémentaires qui ne peuvent pas être affichées sur les premières informations.

10. Dispositif d'affichage flexible selon la revendication 1, dans lequel la pluralité d'options sur l'écran permettant d'exécuter des fonctions liées à l'exécution d'une application comprend en outre une option quelconque parmi une option de réglage de taille, une option de visualisation plus importante et une option de réglage de menu.

11. Dispositif d'affichage flexible selon la revendication 10, dans lequel le dispositif de commande est conçu en outre pour afficher les deuxièmes informations sur la première zone d'affichage étendue en fonction d'une requête de sélectionner l'option de visualisation plus importante.

12. Dispositif d'affichage flexible selon la revendication 10, dans lequel le dispositif de commande est conçu en outre pour afficher les deuxièmes informations comprenant des sous-menus liés aux premières informations sur la première zone d'affichage étendue en fonction d'une requête de sélectionner l'option de réglage de menu.
